# EUROPÄISCHE PATENTSCHRIFT

(11) **EP 3 868 958 B1**
(45) Veröffentlichungstag und Bekanntmachung des Hinweises auf die Patenterteilung: **05.04.2023**
(21) Anmeldenummer: 21154805.2
(22) Anmeldetag: 02.02.2021
(51) Int. Cl.: E01C 23/088, E01C 23/12, B65G 41/00

(54) **MATERIALÜBERGABEVORRICHTUNG FÜR EINE BODENFRÄSMASCHINE**
MATERIAL TRANSFER DEVICE FOR A GROUND MILLING MACHINE
DISPOSITIF DE DÉVERSEMENT DE MATÉRIAU POUR UNE MACHINE FRAISEUSE DE SOL

(30) Priorität: 21.02.2020 DE 102020001163
(43) Veröffentlichungstag der Anmeldung: 25.08.2021
(73) Patentinhaber: BOMAG GmbH, 56154 Boppard (DE)
(72) Erfinder: SCHAAF, Matthias, 56154 Boppard (DE)
(74) Vertreter: Tomerius, Isabel

(56) Entgegenhaltungen:
- EP-A1- 3 115 508
- DE-A1-102009 013 709
- DE-A1-102012 019 016
- US-A- 3 802 525
- US-A1- 2014 183 003
- US-B1- 10 428 471

## Beschreibung

Die Erfindung betrifft eine Materialübergabevorrichtung zur Übergabe von Fräsgut für eine Bodenfräsmaschine. Darüber hinaus betrifft die Erfindung eine Bodenfräsmaschine, insbesondere eine Straßenfräse, mit einer derartigen Materialübergabevorrichtung.

Bodenfräsmaschinen, insbesondere Straßenfräsen, werden beispielsweise zum Abtragen von beschädigten Straßen oder zum Abbau von Bodenschätzen eingesetzt. Hierfür weisen sie einen Maschinenrahmen mit häufig höhenverstellbaren Fahrwerken auf, die beispielsweise Räder oder Kettenlaufwerke sein können. Als Energiequelle dient typischerweise ein Antriebsmotor, beispielsweise ein Dieselverbrennungsmotor. Der Bediener steuert die Bodenfräsmaschine von einem Fahrerstand aus. Die primäre Arbeitseinheit einer Bodenfräsmaschine umfasst eine rotierbar in einem Fräswalzenkasten gelagerte Fräswalze. Diese kann als im Wesentlichen Hohlzylinder ausgebildet sein, auf dessen Außenmantelfläche Fräsmeißel angeordnet sind. Im Betrieb wird die Fräswalze um eine, üblicherweise im Wesentlichen horizontale und quer zur Arbeitsrichtung verlaufende, Rotationsachse in Rotation versetzt, wodurch die Fräsmeißel Bodenmaterial abfräsen. Das gelockerte Fräsgut muss aus dem Fräswalzenkasten abtransportiert werden. Hierzu ist an den Bodenfräsmaschinen typischerweise ein Übergabeförderband angeordnet, welches das Fräsgut aus dem Fräswalzenkasten aufnimmt und beispielsweise durch das Maschineninnere nach vorne oder nach hinten transportiert. Am in Arbeitsrichtung vorderen oder hinteren Ende der Bodenfräsmaschine befindet sich ein Verladeförderband. Das Übergabeförderband ist zum Transport des Fräsgutes vom Fräswalzenkasten auf das Verladeförderband ausgebildet. Das Verladeförderband wiederum transportiert das Fräsgut bis zu einem Abwurfpunkt, an dem das Fräsgut beispielsweise auf ein Transportfahrzeug zum Abtransport überladen wird. Die Förderbänder umfassen üblicherweise ein Traggerüst, eine Antriebsrolle, eine Umlenkrolle, gegebenenfalls ein oder mehrere Tragrollen sowie einen die Antriebsrolle und die Umlenkrolle umlaufenden Fördergurt. Die Förderbänder sind in der Regel zu einer Seite hin in Vertikalrichtung aufsteigend bzw. schräg angeordnet. Die Antriebsrolle, die von einer Antriebseinrichtung, beispielsweise einem Hydromotor, angetrieben wird, ist üblicherweise nahe zum Aufladepunkt des Fräsgutes auf das jeweilige Förderband am Traggerüst angeordnet. Die Umlenkrolle befindet sich dagegen häufig an demjenigen Ende des Förderbandes, an dem das Fräsgut vom Fördergurt abgeworfen wird. Der Fördergurt ist in einer die Antriebsrolle und die Umlenkrolle endlos umlaufenden Weise angeordnet und in der Regel derart angeordnet, dass der Obertrum von der Antriebsrolle zur Umlenkrolle läuft. Tragrollen können zwischen der Antriebsrolle und der Umlenkrolle angeordnet sein. Als Obertrum wird vorliegend derjenige Teil des Transportgurtes bezeichnet, der in Vertikalrichtung den oberen, zwischen der Antriebsrolle und der Umlenkrolle liegenden, Teil bildet; als Unter-trum dagegen derjenige Teil des Fördergurtes, der in Vertikalrichtung den unteren Teil des Fördergurtes zwischen der Antriebsrolle und der Umlenkrolle bildet. Der Obertrum ist somit in der Regel der Lasttrum, der Untertrum ist in der Regel der Leertrum.

Für den vollständigen Abtransport des gelösten Fräsgutes ist es wichtig, dass insbesondere die Übergabe des Fräsgutes vom Übergabeförderband auf das Verladeförderband möglichst effizient und verlustfrei geschieht. Auch im Hinblick darauf, dass weder der Bediener der Bodenfräsmaschinen noch weitere in der Umgebung der Maschine befindliche Personen durch Staub, Lärm oder aus der Bodenfräsmaschine beispielsweise am Übergang von einem Förderband zum anderen austretendes Fräsgut gefährdet werden sollen, ist eine verlustfreie Überladung des Fräsgutes zwischen den Förderbändern wichtig. Erschwert wird die Überladung dadurch, dass zumindest das Verladeförderband typischerweise um eine vertikale Schwenkachse und um eine horizontale Schwenkachse schwenkbar gelagert ist. Auf diese Weise kann die Lage des Abwurfpunktes des Verladeförderbandes sowohl vertikal in der Höhe als auch seitlich bzw. horizontal verstellt werden. Um eine nach außen hin dichte und dadurch verlustfreie Überladung des Fräsgutes zwischen den Förderbändern Übergabeförderband und Verladeförderband zu gewährleisten, sind daher typischerweise Übergabevorrichtungen zu Überladung des Fräsgutes vom Übergabeförderband in eine Aufnahmeöffnung einer Aufnahmevorrichtung des Verladeförderbands vorgesehen. Beispielsweise sind typischerweise Gummimatten am Übergabeförderband vorgesehen, die den Fall des Fräsgutes von diesem auf das Verladeförderband leiten sollen. Darüber hinaus ist typischerweise ein Trichter am Verladeförderband vorhanden, der das herabfallende Fräsgut auffängt und auf das Verladeförderband leitet. Die Übergabevorrichtung bezeichnet somit insbesondere denjenigen Teil der Gesamtfördereinrichtung, der in Förderrichtung zwischen dem Abwurfpunkt des Fräsgutes des Übergabeförderbandes und dem Aufnahmepunkt für das Fräsgut am Verladeförderband angeordnet ist und in diesem Bereich für einen definierten Materialfluss sorgt.

Um die Dichtheit der Materialübergabevorrichtung bei der Übertragung des Fräsgutes vom Übergabeförderband auf das Verladeförderband zur Außenumgebung hin zu gewährleisten, sind verschiedene Lösungen im Stand der Technik bekannt, beispielsweise aneinander entlang gleitende Kugelhauben, wie sie in der DE 10 2012 019 016 A1 der Anmelderin beschrieben sind. Weitere Systeme des Standes der Technik sind beispielsweise in US 10 428 471 B1, US 2014/183003 A1 und EP 3 115 508 A1 beschrieben. Mit diesen Ausführungen konnte der Materialverlust bei der Übergabe zwischen den Förderbändern der Bodenfräsmaschine bereits reduziert werden. Insbesondere bei Lösungen mit herabhängenden Gummimatten kann es allerdings bei einer starken Verschwenkung, insbesondere zu den Seiten, des Verladeförderbandes durchaus dazu kommen, dass Lücken bzw. Freiräume nach außen zwischen den Gummimatten entstehen, so dass Fräsgut und/oder Staub nach außen austreten kann. Darüber hinaus werden die Bauteile der Übergabevorrichtungen des Standes der Technik beim Verschwenken des Verladeförderbandes oftmals stark verformt, was einen erhöhten Verschleiß nach sich zieht. Zusätzlich kommt es durch den oftmals komplizierten Aufbau der Übergabestelle zu einem erhöhten Raumbedarf. Auch die Aufhängung des Verladeförderbandes an der Bodenfräsmaschine muss dann oftmals sehr raumgreifend ausgestaltet werden, was allerdings dazu führt, dass das Verladeförderband im Betrieb oftmals hin- und her schwingt, wodurch teilweise Fräsgut neben die Transportfahrzeuge gestreut wird.

Vor diesem Hintergrund ist es die Aufgabe der vorliegenden Erfindung, eine Materialübergabevorrichtung anzugeben, die zum einen unabhängig von der Schwenkstellung des Verladeförderbandes besonders dicht ist und den Austritt von Fräsgut, Staub und Lärm an der Übergabestelle zwischen den Förderbändern effizient eindämmt. Zum anderen soll der Aufbau der Materialübergabevorrichtung möglichst einfach sein, dadurch nur geringe Herstellungskosten verursachen und gleichzeitig den Verschleiß der verwendeten Bauteile so gering wie möglich halten. Eine weitere Aufgabe besteht darin, Schwingungen des Verladeförderbandes zu verringern, um Streuverluste zu vermeiden.

Die Lösung gelingt mit einer Materialübergabevorrichtung gemäß dem unabhängigen Anspruch 1. Bevorzugte Weiterbildungen sind in den abhängigen Ansprüchen angegeben.

Konkret gelingt die Lösung bei einer Materialübergabevorrichtung gemäß den vorstehenden Ausführungen dadurch, dass die horizontale Schwenkachse in Vertikalrichtung über dem Verladeförderband und auf Höhe der Erstreckung der Aufnahmeöffnung der Aufnahmevorrichtung in Vertikalrichtung oder darüber angeordnet ist. Zunächst ist somit festzuhalten, dass die horizontale Schwenkachse in Vertikalrichtung über dem Verladeförderband angeordnet sein soll. Hiermit wird insbesondere bezeichnet, dass sich die horizontale Schwenkachse in Vertikalrichtung über dem Obertrum des Verladeförderbands befindet, d.h. oberhalb des in Vertikalrichtung unteren Endes des Obertrums. Dabei ist zu beachten, dass das Verladeförderband schräg nach vorne hin ansteigt, sodass insbesondere beispielsweise der Abwurfpunkt des Verladeförderbandes deutlich über der horizontalen Schwenkachse angeordnet sein kann. Die Lage der horizontalen Schwenkachse bezieht sich in Bezug auf das Verladeförderband daher auf diejenige Vertikalebene, in der die horizontale Schwenkachse liegt bzw. in der sich die horizontale Schwenkachse erstreckt. Diese schneidet ebenfalls das Verladeförderband und insbesondere dessen Obertrum. In dieser Vertikalebene ist die horizontale Schwenkachse in Vertikalrichtung über dem Verladeförderband beziehungsweise dem Obertrum des Verladeförderbands angeordnet. Die Relativanordnung der horizontalen Schwenkachse zum Verladeförderband bezieht sich also nicht auf jeden Bereich des Verladeförderbandes, sondern lediglich auf denjenigen Bereich, der in einer Vertikalebene zusammen mit der horizontalen Schwenkachse (konkret in Vertikalrichtung unter dieser) liegt. Ferner liegt die horizontale Schwenkachse erfindungsgemäß nicht nur oberhalb des Verladeförderbandes, sondern zudem wenigstens auf Höhe der Erstreckung der Aufnahmeöffnung der Aufnahmevorrichtung in Vertikalrichtung oder darüber. Die Höhe der Aufnahmeöffnung der Aufnahmevorrichtung bezeichnet dabei die Gesamterstreckung der Aufnahmeöffnung in Vertikalrichtung, d.h. den Bereich in Vertikalrichtung, der zwischen dem in Vertikalrichtung unteren und dem in Vertikalrichtung oberen Maximalpunkt der Aufnahmeöffnung definiert wird.

Im Stand der Technik, so wie beispielsweise in DE 10 2012 019 016 A1 und EP 3 115 508 A1 offenbart, ist die horizontale Schwenkachse des Verladeförderbandes oftmals auf Höhe des Verladeförderbandes, beispielsweise der in Arbeitsrichtung hinten liegenden Umlenkrolle des Verladeförderbandes, angeordnet. Dies wurde so ausgeführt, da dann bei einer Verschwenkung des Verladeförderbandes um die horizontale Schwenkachse dessen hinteres Ende nahezu ortsfest gegenüber dem Übergabeförderband und ebenfalls gegenüber dem Maschinenrahmen der Bodenfräsmaschine bleibt. Auf diese Weise wurden kontrollierte Übergabebedingungen für das Fräsgut zwischen den Förderbändern geschaffen. Nachteilig daran ist allerdings, dass sich dann die Aufnahmevorrichtung am Verladeförderband, beispielsweise der im Stand der Technik typischerweise verwendete Trichter, mit seiner Aufnahmeöffnung vergleichsweise ausladend hin- und her bewegt, was insgesamt dazu führt, dass die Materialübergabevorrichtung vergleichsweise raumgreifend ausgeführt werden muss. Darüber hinaus muss eine am Übergabeförderband angeordnete Übergabevorrichtung so ausgebildet sein, dass sie den entsprechenden Bewegungen des Trichters folgen kann, um das Fräsgut möglichst zielsicher in diesen zu fördern. Auch dies führt zu den eingangs bezeichneten Problemen des Standes der Technik.

Die Erfindung beruht nun auf der Erkenntnis, dass es auf eine Bewegung des hinteren Endes des Verladeförderbandes gegenüber dem Übergabeförderband beziehungsweise dem Maschinenrahmen der Bodenfräsmaschine weniger stark ankommt als bisher gedacht. So wurde festgestellt, dass eine besonders vorteilhafte Überladung des Fräsgutes vom Übergabeförderband in die Aufnahmeöffnung der Aufnahmevorrichtung des Verladeförderbandes gewährleistet werden kann, wenn die Bewegung der Aufnahmeöffnung der Aufnahmevorrichtung bei einer Schwenkbewegung des Verladeförderbandes minimiert wird. Dazu ist es erstrebenswert, dass die horizontale Schwenkachse in Vertikalrichtung oberhalb des Verladeförderbandes in einem bestimmten Bereich positioniert ist. Denn da sich die Aufnahmeöffnung der Aufnahmevorrichtung in Vertikalrichtung über dem Verladeförderband befindet, lassen sich die entsprechenden Bewegungen der Aufnahmeöffnung dadurch verringern, dass die horizontale Schwenkachse ebenfalls in Vertikalrichtung über dem Verladeförderband angeordnet wird und zwar konkret im Bereich der Vertikalerstreckung der Aufnahmeöffnung oder darüber. Dadurch wird zwar in Kauf genommen, dass sich das hintere Ende des Verladeförderbandes, also insbesondere im Bereich der Antriebsrolle, bei einer Verschwenkung um die horizontale Schwenkachse stärker gegenüber dem Übergabeförderband bewegt. Dies sollte im Stand der Technik vermieden werden. Auf der anderen Seite wird durch die erfindungsgemäße Ausführung allerdings ebenfalls erreicht, dass die Aufnahmeöffnung der Aufnahmevorrichtung des Verladeförderbandes sich nur sehr wenig während des Verschwenkvorganges bewegt und gegenüber dem Übergabeförderband beziehungsweise dem Maschinenrahmen der Bodenfräsmaschine fast ortsfest ist. Dies wiederum ermöglicht eine besonders präzise und gleichzeitig baulich sehr einfach zu realisierende Übergabe des Fräsguts vom Übergabeförderband auf das Verladeförderband, da die ausgehend vom Übergabeförderband zu treffende Aufnahmeöffnung der Aufnahmevorrichtung am Verladeförderband so gut wie ortsfest ist und keine ausladenden Bewegungen macht. Das Fräsgut kann vom Übergabeförderband daher im Wesentlichen immer an derselben Stelle abgeladen werden und wird dennoch zielsicher in die Aufnahmeöffnung und damit auf das Verladeförderband transportiert.

Die Vorteile der erfindungsgemäßen Anordnung der horizontalen Schwenkachse ergeben sich somit zunächst in einem ersten Schritt dann, wenn die horizontale Schwenkachse innerhalb eines bestimmten, sich in Vertikalrichtung erstreckenden Bereichs angeordnet ist. Dieser erfindungsgemäß anzustrebende Bereich liegt in Vertikalrichtung nicht nur über dem Verladeförderband beziehungsweise dem Obertrum des Verladeförderbandes, sondern erstreckt sich von dem in Vertikalrichtung am tiefsten liegenden Punkt der Aufnahmeöffnung bis zum in Vertikalrichtung am höchsten liegenden Punkt der Aufnahmeöffnung. Die Anordnung der horizontalen Schwenkachse "oberhalb des Verladeförderbandes" bezieht sich auf die vorstehend bereits beschriebene Stelle des Verladeförderbandes, die in derselben Vertikalebene liegt, in der sich die horizontale Schwenkachse erstreckt. Ein alternativer Bezugspunkt ist die in Arbeitsrichtung der Bodenfräsmaschine oder in Förderrichtung des Fräsgutes auf dem Verladeförderband hinten liegende Umlenkrolle des Verladeförderbandes. In diesem Fall beginnt der Bereich direkt über der in Vertikalrichtung am oberen Scheitelpunkt dieser Umlenkrolle anliegenden Stelle des Obertrums. Der Bereich erstreckt sich von hier in Vertikalrichtung nach oben, beispielsweise bis zum Übergabeförderband beziehungsweise dem Obertrum des Übergabeförderbandes. Es ist daher bevorzugt vorgesehen, dass die horizontale Schwenkachse in Vertikalrichtung unterhalb des Abwurfpunktes des Übergabeförderbandes, insbesondere in Vertikalrichtung unterhalb des in Vertikalrichtung höchsten Punktes des Obertrums des Übergabeförderbandes, angeordnet ist. Die horizontale Schwenkachse ist mit anderen Worten bevorzugt in Vertikalrichtung zwischen dem Übergabeförderband (beziehungsweise dessen Obertrum bzw. dessen in Vertikalrichtung höchsten Punktes) und dem Verladeförderband (beziehungsweise dessen Obertrum bzw. dessen in Vertikalrichtung tiefsten Punktes des Obertrums) angeordnet. Diejenige Vertikalebene, in der sich die horizontale Schwenkachse erstreckt, schneidet allerdings nicht zwangsläufig das Übergabeförderband. Es wird daher vorstehend auf die horizontale Projektion der Lage des Übergabeförderbandes oder dessen Obertrums in Vertikalrichtung auf diejenige Vertikalebene, in der sich die horizontale Schwenkachse erstreckt, Bezug genommen. Speziell wird hier bevorzugt die in Arbeitsrichtung der Bodenfräsmaschine oder in Förderrichtung des Fräsgutes auf dem Übergabeförderband vorne liegende Umlenkrolle als Referenz genommen, so dass der Bereich in Vertikalrichtung bis zur in Vertikalrichtung am oberen Scheitelpunkt dieser Umlenkrolle anliegenden Stelle des Obertrums des Übergabeförderbands reicht. Insbesondere in diesem Bereich ergeben sich die vorstehend bereits beschriebenen Vorteile gegenüber dem Stand der Technik. Ferner ist vorgesehen, dass die horizontale Schwenkachse nicht nur oberhalb des Obertrums des Verladeförderbandes positioniert ist, wie vorstehend beschrieben, sondern zudem wenigstens auf Höhe der Erstreckung der Aufnahmeöffnung der Aufnahmevorrichtung in Vertikalrichtung oder darüber. Besonders bevorzugt ist eine Positionierung auf Höhe der Erstreckung der Aufnahmeöffnung der Aufnahmevorrichtung in Vertikalrichtung. Damit wird somit ein Vertikalbereich definiert, der durch den in Vertikalrichtung untersten Punkt und den in Vertikalrichtung obersten Punkt der Aufnahmeöffnung begrenzt wird. Damit wird die horizontale Schwenkachse gegenüber konventionellen Anordnungen in Vertikalrichtung deutlich weiter nach oben gerückt. Auf diese Weise kann das vorstehend beschriebene verbesserte Abdichtverhalten zwischen dem Verladeförderband und dem Übergabeförderband erhalten werden, da dadurch letztlich die Relativbewegung insbesondere der Aufnahmeöffnung bzw. der Fläche der Aufnahmeöffnung bzw. der Durchtrittsöffnung gegenüber dem Übergabeförderband gleichmäßiger auf die Gesamtöffnung verteilt wird.

Bevorzugt ist es ferner, wenn die horizontale Schwenkachse auch in einer horizontalen Ebene gesehen in Richtung der Arbeits- bzw. Fräsrichtung bzw. Förderrichtung bzw. in einer Richtung horizontal und senkrecht zum Verlauf der horizontalen Schwenkachse in einem Bereich zwischen den in dieser Richtung maximal zueinander beabstandeten Punkten der Aufnahmeöffnung verläuft. Auch dies trägt dazu bei, dass die Relativbewegung insbesondere der Aufnahmeöffnung bzw. der Fläche der Aufnahmeöffnung bzw. der Durchtrittsöffnung gegenüber dem Übergabeförderband gleichmäßiger auf die Gesamtöffnung verteilt wird. Insgesamt wird in Richtung der horizontalen Schwenkachse gesehen somit diese bevorzugt innerhalb einer Fläche angeordnet, deren Außenkanten in Horizontalrichtung durch die in Horizontalrichtung maximalen Außenpunkte der Aufnahmeöffnung und in Vertikalrichtung durch die in Vertikalrichtung maximalen Außenpunkte der Aufnahmeöffnung definiert werden. Innerhalb des vorstehend beschriebenen Bereiches zur Anordnung der horizontalen Schwenkachse kommen die Vorteile der Erfindung umso stärker zum Tragen, je näher die horizontale Schwenkachse in Vertikalrichtung und/oder in Horizontalrichtung an der Aufnahmeöffnung der Aufnahmevorrichtung am Verladeförderband angeordnet ist. Die Aufnahmeöffnung der Aufnahmevorrichtung beschreibt vorliegend somit einen in Vertikalrichtung nach oben offenen Eingang für das vom Übergabeförderband in Richtung auf das Verladeförderband abgeworfene Fräsgut. Das Fräsgut fällt durch die Aufnahmeöffnung in die Aufnahmevorrichtung hinein und wird von dieser auf das Verladeförderband geleitet beziehungsweise daran gehindert, vom Verladeförderband aufgrund der kinetischen Energie des Abwurfes vom Übergabeförderband herabzufallen. Während des Herabfallens vom Übergabeförderband auf das Verladeförderband passiert das Fräsgut irgendwann eine theoretische beziehungsweise virtuelle (also tatsächlich nicht vorhandene, sondern nur gedachte) Fläche (Durchtrittsfläche), vor der das Fräsgut sich noch außerhalb der Aufnahmevorrichtung befindet, und nach der sich das Fräsgut in der Aufnahmevorrichtung befindet. Diese Fläche, die mit anderen Worten sozusagen den Eingang für das Fräsgut durch die Aufnahmeöffnung in die Aufnahmevorrichtung hinein beschreibt, wird nachstehend als Eintrittsfläche bezeichnet. Die Eintrittsfläche bezeichnet somit den Verlauf einer Durchtrittsöffnung. Im einfachsten Fall, wenn die Aufnahmeöffnung in einer Ebene liegt, handelt es sich hierbei um eine Eintrittsebene. Da allerdings auch andere Geometrien der Aufnahmeöffnung, beispielsweise mit gekurvtem, trichterförmigen und/oder gewelltem Öffnungsrand, erfindungsgemäß umfasst sind, wird der allgemeinere Begriff Eintrittsfläche verwendet. Die Vorteile der vorliegenden Erfindung entfalten sich dann optimal, wenn gemäß einer bevorzugten Ausführungsform die horizontale Schwenkachse in Vertikalrichtung und/oder in Horizontalrichtung, insbesondere senkrecht zur horizontalen Schwenkacshe, auf Höhe der Eintrittsfläche der Aufnahmeöffnung der Aufnahmevorrichtung angeordnet ist. Bei dieser Ausführung bewegt sich die Aufnahmeöffnung der Aufnahmevorrichtung am aller wenigsten hin- und her, während das Verladeförderband um die horizontale Schwenkachse verschwenkt wird.

Grundsätzlich treten bei einer erfindungsgemäßen Anordnung der horizontalen Schwenkachse die vorstehend beschriebenen Vorteile ein, unabhängig davon, wie genau die vertikale Schwenkachse zur seitlichen Verschwenkung des Verladeförderbandes angeordnet ist. Um allerdings ebenfalls die seitliche Bewegung der Aufnahmeöffnung der Aufnahmevorrichtung am Verladeförderband bei einer seitlichen Verschwenkung des Verladeförderbandes um die vertikale Schwenkachse möglichst minimal zu gestalten, ist es bevorzugt vorgesehen, dass die vertikale Schwenkachse durch die Mitte der Aufnahmeöffnung der Aufnahmevorrichtung in der Horizontalebene verläuft. Die Mitte beschreibt insbesondere den geometrischen Schwerpunkt der auf eine horizontale Ebene projizierten Aufnahmeöffnung. Es ist ergänzend oder alternativ dazu ebenfalls bevorzugt, dass sich die vertikale Schwenkachse und die horizontale Schwenkachse in einem Schnittpunkt schneiden. Dieser Schnittpunkt liegt bevorzugt ebenfalls in der Mitte der Aufnahmeöffnung der Aufnahmevorrichtung, insbesondere definiert wie vorstehend angegeben, bzw. in der Durchtrittsfläche. "In der Durchtrittsfläche" ist dabei in Bezug auf die Lage der horizontalen Schwenkachse und/oder des Schnittpunktes zwischen horizontalen und der vertikalen Schwenkachse bezüglich der Vertikalrichtung insbesondere im Sinne von "im Wesentlichen in der Durchtrittsfläche" zu verstehen, was vorliegend einen Bereich von kleiner/gleich + und/oder - 12cm, insbesondere von kleiner gleich + und/oder - 5cm, in Vertikalrichtung nach oben und/oder nach unten mit umfassen kann. "In der Durchtrittsfläche" ist ergänzend oder alternativ in Bezug auf die Horizontalrichtung in Arbeitsrichtung der Bodenfräsmaschine bzw. in Förderrichtung des Übergabeförderbandes ebenfalls insbesondere im Sinne von "im Wesentlichen in der Durchtrittsfläche" zu verstehen, was vorliegend einen Bereich von kleiner/gleich + und/oder - 12cm, insbesondere von kleiner gleich + und/oder - 5cm, in Horizontalrichtung nach vorn und/oder nach hinten in Bezug auf mit umfassen kann. Gleichermaßen liegt der Schnittpunkt zwischen der horizontalen und der vertikalen Schwenkachse bevorzugt in diesem Bereich. Auch sind Abweichungen in der Horizontalebene senkrecht zur Förderrichtung möglich, was zu einer außermittigen Lage des Schnittpunktes führen würde. Bevorzugt ist allerdings eine in Bezug auf die Breite der Aufnahmeöffnung in der Horizontalebene senkrecht zur Förderrichtung des Übergabeförderbandes mittige Lage der vertikalen Schwenkachse und insbesondere auch des Schnittpunktes. Die Aufnahmeöffnung der Aufnahmevorrichtung bewegt sich bei diesen Ausführungen sowohl bei einer Verschwenkung des Verladeförderbandes um die horizontale Schwenkachse als auch um die vertikale Schwenkachse in vergleichsweise geringem Umfang bzw. verhältnismäßig gleichmäßig relativ zum Übergabeförderband beziehungsweise zum Maschinenrahmen der Bodenfräsmaschine. Die Überladung des Fräsgutes zwischen den Förderbändern gelingt daher besonders gut.

Gemäß einer bevorzugten Ausführungsform ist es vorgesehen, dass die Aufnahmevorrichtung am Verladeförderband angeordnet und als ein von diesem beziehungsweise vom Obertrum des Verladeförderbandes vertikal nach oben aufragendes und zumindest zu den Seiten und in Transportrichtung des Fräsgutes (bezogen auf das Verladeförderband) nach hinten geschlossenes Gehäuse ausgebildet ist. Die Aufnahmevorrichtung ist dazu ausgebildet, das vom Übergabeförderband kommende Fräsgut auf das Verladeförderband zu leiten und auf diesem zu halten. Dafür ist sie beispielsweise aus einem steifen, unbiegsamen Material wie Metall oder einem harten Kunststoff ausgebildet. Die Aufnahmevorrichtung weist ebenfalls einen in Vertikalrichtung oben liegenden Gehäusedeckel auf, in dem die Aufnahmeöffnung angeordnet ist. Der Gehäusedeckel ist bevorzugt parallel zum Verladeförderband beziehungsweise der Transportrichtung des Verladeförderbandes ausgerichtet. Auf diese Weise wird eine besonders sichere Leitung des Fräsgutes auf das Verladeförderband sichergestellt.

Grundsätzlich sind verschiedene Formen der Aufnahmeöffnung denkbar. Bevorzugt ist es, dass die Aufnahmeöffnung am vertikal oberen Ende der Aufnahmevorrichtung angeordnet ist und insbesondere polygonal, bevorzugt oval und ganz besonders bevorzugt im Wesentlichen kreisrund ausgebildet ist. Diese Angaben beziehen sich beispielsweise auf den die Aufnahmeöffnung definierenden Rand der Aufnahmevorrichtung. Dieser läuft insbesondere vollständig um die Aufnahmeöffnung herum, so dass er die Aufnahmeöffnung insbesondere in Transportrichtung des Fräsgutes auf dem Verladeförderband nach vorne begrenzt. Alternativ ist es ebenfalls möglich, dass die Aufnahmeöffnung auch in Transportrichtung des Fräsgutes auf dem Verladeförderband nach vorne offen ausgebildet ist. Es ist vorteilhaft, wenn die nachstehend noch näher beschriebene Übergabevorrichtung sich bei Schwenkbewegungen des Verladeförderbandes möglichst reibungsfrei in der Aufnahmeöffnung der Aufnahmevorrichtung bewegen kann. Dies gelingt besonders gut bei einer kreisförmig ausgebildeten Aufnahmeöffnung. Darüber hinaus ist es bevorzugt, wenn die Aufnahmeöffnung beziehungsweise der die Aufnahmeöffnung definierende Rand der Aufnahmevorrichtung in einer Ebene liegt. Diese Ebene beschreibt dann sogleich ebenfalls die vorstehend genannte Eintrittsfläche.

Die Lagerung des Verladeförderbandes an einer Bandaufhängung der Materialübergabevorrichtung, derart, dass die horizontale Schwenkachse sich an der zuvor beschriebenen erfindungsgemäßen Position befindet, kann grundsätzlich in verschiedenen Weisen realisiert werden. Die Bandaufhängung bezeichnet dasjenige Bauteil, mit dem das Verladeförderband am Maschinenrahmen der Bodenfräsmaschine gelagert ist. Um baulich die Verlagerung der horizontalen Schwenkachse gegenüber dem Stand der Technik zu ermöglichen, ist es bevorzugt, dass am Verladeförderband ein Schwenkhebel angeordnet ist, der vertikal nach oben aufragt, und der an seiner dem Verladeförderband abgelegenen Seite um die horizontale Schwenkachse schwenkbar an einer Bandaufhängung gelagert ist. Der Schwenkhebel ist mit dem Tragrahmen des Verladeförderbandes ortsfest verbunden und trägt ein vom Verladeförderband aus in Vertikalrichtung nach oben versetztes Lager zur schwenkbaren Anbindung an die Bandaufhängung. Diese schwenkbare Anbindung definiert die horizontale Schwenkachse. Beim Schwenkhebel handelt es sich also um ein Bauteil wie einen Arm, eine Lasche oder einen Träger, die den Tragrahmen des Verladeförderbandes in Vertikalrichtung nach oben und im Wesentlichen senkrecht zur Längserstreckungsrichtung des Verladeförderbandes verlängert, um eine erfindungsgemäße Positionierung der horizontalen Schwenkachse zu ermöglichen. Die Bandaufhängung ist beispielsweise als zweiarmige Gabel ausgebildet, die an ihrem vertikal oberen Ende bevorzugt um die vertikale Schwenkachse schwenkbar über eine Bandlagerung am Maschinenrahmen der Bodenfräsmaschine gelagert ist. Die beiden Arme der gabelförmigen Bandaufhängung verlaufen in Vertikalrichtung nach unten und sind auf beiden Seiten des Verladeförderbandes über jeweils einen Schwenkhebel mit diesem verbunden. Durch die Verlagerung der horizontalen Schwenkachse über die Schwenkhebel in Vertikalrichtung nach oben kann die erfindungsgemäße Bandaufhängung, speziell die Arme der erfindungsgemäßen Bandaufhängung, kürzer ausgebildet sein, da sie weniger weit vertikal nach unten geführt werden muss. Durch die kürzere Bandaufhängung ist die erfindungsgemäße Vorrichtung insgesamt steifer als diejenige des Standes der Technik, da die Bandaufhängung aufgrund der kürzeren Arme weniger stark in Schwingung geraten kann. Auf diese Weise ergibt sich der weitere erfindungsgemäße Vorteil, dass das Verladeförderband im Betrieb der Vorrichtung weniger stark hin- und her schwingt, wodurch das Fräsgut vom Verladeförderband am Abwurfpunkt besonders präzise auf ein Transportfahrzeug übertragen werden kann und insbesondere Streuverluste aufgrund der ungewollten Bewegungen des Verladeförderbandes reduziert sind.

Als nächstes wird auf die Übergabevorrichtung zur Überladung des Fräsguts vom Übergabeförderband in die Aufnahmeöffnung der Aufnahmevorrichtung des Verladeförderbands eingegangen. Die Übergabevorrichtung ist gemäß einer bevorzugten Ausführungsform ortsfest gegenüber dem Übergabeförderband und/oder dem Maschinenrahmen der Bodenfräsmaschine angeordnet. Wenn das Verladeförderband um die horizontale oder vertikale Schwenkachse verschwenkt wird, bewegt sich das Verladeförderband also ebenfalls gegenüber der Übergabevorrichtung. Die Aufgabe der Übergabevorrichtung ist es, das Fräsgut sicher und verlustfrei vom Übergabeförderband in die Aufnahmevorrichtung des Verladeförderbandes zu transportieren beziehungsweise zu leiten. Um einen verlustfreien Transport und auch eine möglichst geringe Staubfreisetzung zu gewährleisten, ist es bevorzugt, dass die Übergabevorrichtung den Transportweg des Fräsgutes vom Übergabeförderband zur Aufnahmevorrichtung bis auf einen Übergabeeingang und einen Übergabeausgang vollständig einhaust und insbesondere rohrknieförmig ausgebildet ist. Der Übergabeeingang bezeichnet eine Öffnung der Übergabevorrichtung, durch die hindurch das Fräsgut vom Übergabeförderband kommend in die Übergabevorrichtung eintritt. Der Übergabeausgang wiederum bezeichnet eine Öffnung der Übergabevorrichtung, durch die hindurch das Fräsgut die Übergabevorrichtung zum Verladeförderband beziehungsweise zur Aufnahmevorrichtung am Verladeförderband hin verlässt. Die Übergabevorrichtung bildet daher insgesamt einen Transporttunnel, durch den das Fräsgut bewegt wird. Sie ist, bis auf den Übergabeeingang und den Übergabeausgang, nach außen hin dicht ausgebildet. Dadurch kann es nicht passieren, dass - beispielsweise wie im Stand der Technik - bei einer Verschwenkung des Verladeförderbandes die herabhängenden Gummimatten zur Leitung des Fräsgutes zwischen den Förderbändern auseinanderklaffen und Lücken entstehen, durch die Fräsgut, Staub und Lärm austreten kann. Die Übergabevorrichtung umfasst, komplementär zum Transportweg des Fräsgutes innerhalb der Übergabevorrichtung, einen im Wesentlichen horizontalen Anteil, eine in Vertikalrichtung nach unten führende Kurve und einen im Wesentlichen vertikalen Anteil. In den horizontalen Anteil tritt das Fräsgut über den Übergabeeingang in die Übergabevorrichtung ein, wird dann im Bereich der Kurve vertikal nach unten umgeleitet, gelangt in den vertikalen Anteil und verlässt die Übergabevorrichtung sodann über den Übergabeausgang. Die Umleitung des Fräsgutes in der Übergabevorrichtung erfolgt dabei durch die Schwerkraft und/oder durch ein Abprallen des Fräsgutes an einer Wand der Übergabevorrichtung.

Um eine möglichst verlustfreie und emissionsarme Übergabe des Fräsgutes auf das Verladeförderband zu gewährleisten, ist es bevorzugt, wenn die Übergabevorrichtung das Fräsgut nicht nur bis zur Aufnahmevorrichtung beziehungsweise der Aufnahmeöffnung der Aufnahmevorrichtung, sondern direkt in die Aufnahmevorrichtung hinein leitet. Hierfür ist bevorzugt vorgesehen, dass die Übergabevorrichtung in Vertikalrichtung unten eine Überlänge aufweist, die derart ausgebildet ist, dass sie bis in die Aufnahmevorrichtung hinein ragt und sich bis vertikal unter die Aufnahmeöffnung der Aufnahmevorrichtung erstreckt. Mit anderen Worten ist der sich am in Vertikalrichtung unteren Ende der Übergabevorrichtung befindliche Übergabeausgang in Vertikalrichtung unter der Aufnahmeöffnung der Aufnahmevorrichtung angeordnet. Das in Vertikalrichtung untere Ende der Übergabevorrichtung befindet sich daher ebenfalls innerhalb der Aufnahmevorrichtung. Es ergibt sich daher ein Überlappungsbereich zwischen der Übergabevorrichtung, insbesondere ihrer Überlänge, und der Aufnahmevorrichtung. In diesem Überlappungsbereich befindet sich das transportierte Fräsgut sowohl in der Übergabevorrichtung als auch in der Aufnahmevorrichtung und wird von beiden Vorrichtungen zumindest nach hinten und seitlich eingehaust. Auf diese Weise wird besonders effizient verhindert, dass Fräsgut, Staub oder Lärm aus der Materialübergabevorrichtung in die Umwelt gelangt.

Wie vorstehend bereits beschrieben, bewegt sich bei einer Verschwenkung des Verladeförderbandes gegenüber dem Übergabeförderband ebenfalls die Aufnahmevorrichtung gegenüber der Übergabevorrichtung. Um die Dichtheit der Vorrichtung zu gewährleisten und den Verschleiß zu minimieren, sind die Übergabevorrichtung und die Aufnahmevorrichtung insbesondere im Überlappungsbereich komplementär zueinander ausgebildet. So ist es beispielsweise bevorzugt vorgesehen, dass die Überlänge der Übergabevorrichtung, insbesondere an ihrem vertikal unteren Ende, komplementär zur Aufnahmeöffnung der Aufnahmevorrichtung und insbesondere polygonal, bevorzugt oval und ganz besonders bevorzugt im Wesentlichen kreisrund ausgebildet ist. Wenn sowohl die Übergabevorrichtung als auch die Aufnahmevorrichtung zumindest im Überlappungsbereich im Wesentlichen kreisrund ausgebildet sind, ergibt sich eine besonders vorteilhafte Relativbeweglichkeit der beiden Vorrichtungen zueinander. Weder durch ein Verschwenken des Verladeförderbandes um die horizontale Schwenkachse noch um die vertikale Schwenkachse kommt es bei dieser Ausführungsform zur Entstehung von Lücken zwischen der Übergabevorrichtung und der Aufnahmevorrichtung, durch die hindurch Fräsgut nach außen entweichen könnte. Gleichzeitig muss sich beispielsweise die Übergabevorrichtung während des Verschwenkens nicht oder so gut wie nicht verformen, so dass fast kein Verschleiß auftritt.

Damit die Dichtheit der erfindungsgemäßen Materialübergabevorrichtung auch bei einer Verschwenkung des Verladeförderbandes in jeder Schwenkposition erhalten bleibt, muss die Überlänge der Übergabevorrichtung ausreichend lang dimensioniert sein, dass ihr Übergabeausgang nie aus der Aufnahmeöffnung der Aufnahmevorrichtung heraus gezogen wird. Es ist daher bevorzugt, dass die Überlänge derart ausgebildet ist, dass sie auch bei seitlich um die vertikale Schwenkachse gegenüber dem Übergabeförderband verschwenktem Verladeförderband noch bis in die Aufnahmevorrichtung hinein ragt, insbesondere unabhängig von einer Verschwenkung des Verladeförderbandes um die horizontale Schwenkachse. Hierfür muss die Überlänge ausreichend lange ausgebildet, sprich, ausreichend weit in Vertikalrichtung nach unten geführt sein. Besonders bevorzugt ist es, dass die Überlänge auch dann noch bis in die Aufnahmevorrichtung hinein ragt, wenn das Verladeförderband um bis zu 55°, bevorzugt um bis zu 65°, besonders bevorzugt um bis zu 75° und ganz besonders bevorzugt um bis zu 85° um die vertikale Schwenkachse verschwenkt ist. Bei derartigen Schwenkpositionen des Verladeförderbandes klaffen im Stand der Technik häufig die vom Übergabeförderband herabhängenden Gummimatten auseinander, so dass Lücken entstehen, durch die Fräsgut entweichen kann. Dies kann bei der erfindungsgemäßen Ausführung nicht passieren.

Zum Erhalt der vertikalen Schwenkachse ist es bevorzugt vorgesehen, dass das Verladeförderband eine Bandlagerung aufweist, die insbesondere wenigstens einen Bolzen umfasst, mit der das Verladeförderband um die vertikale Schwenkachse gegenüber dem Übergabeförderband schwenkbar an einem Maschinenrahmen einer Bodenfräsmaschine lagerbar ist. Die Bandlagerung stellt die Verbindung zwischen dem Verladeförderband und dem Maschinenrahmen der Bodenfräsmaschine her und ist dabei beispielsweise zumindest teilweise einstückig mit der Bandaufhängung ausgebildet. Die Bandaufhängung weist beispielsweise wenigstens einen und insbesondere zwei in Vertikalrichtung übereinanderliegende Lagerpunkte auf, mit denen sie über die Bandlagerung am Maschinenrahmen der Bodenfräsmaschine schwenkbar gelagert ist. Auf der anderen Seite erstreckt sich die Bandaufhängung vertikal nach unten bis zu den Schwenkhebeln des Verladeförderbandes, wo sie zur Bildung der horizontalen Schwenkachse an diesen gelagert ist. Beispielsweise umfasst die Bandlagerung zumindest jeweils ein Lagerauge an der Bandaufhängung und am Maschinenrahmen der Bodenfräsmaschine, wobei die jeweiligen Lageraugen vertikal übereinander angeordnet sind. Ein Bolzen wird durch beide Lageraugen durchgesteckt und erstreckt sich mit seiner Längsrichtung daher ebenfalls in Vertikalrichtung, so dass auf diese Weise ein besonders einfaches und stabiles Schwenkgelenk für die vertikale Schwenkachse entsteht.

Grundsätzlich ist es möglich, die Übergabevorrichtung insgesamt aus steifem Material auszubilden. Gegenüber dem Stand der Technik muss die erfindungsgemäße Übergabevorrichtung auch bei Verschwenkungen des Verladeförderbandes wenn überhaupt nur sehr geringfügige Bewegungen oder Verformungen durchführen. Da derartige Verformungen allerdings nicht völlig ausgeschlossen werden, ist es bevorzugt, die Übergabevorrichtung zumindest teilweise elastisch beziehungsweise biegsam auszubilden. So ist es beispielsweise bevorzugt, wenn die Übergabevorrichtung ein formgebendes Traggestell und eine fräsgutleitende Verkleidung aufweist, wobei das Traggestell die Verkleidung stützt. Selbstverständlich kann dem Traggestell ebenfalls eine Fräsgut leitende Funktion zukommen, sodass dieses nicht lediglich zum Aufspannen der Verkleidung dient. Das Traggestell ist beispielsweise aus einem steifen, unbiegsamen Material wie Metall oder einem harten Kunststoff ausgebildet. Die Verkleidung dagegen ist bevorzugt aus einem elastischen Material, beispielsweise Kunststoff oder hartem Gummi, gefertigt. Das Traggestell sorgt insbesondere dafür, dass die Verkleidung mit der notwendigen lichten Weite aufgespannt ist, sodass das Fräsgut durch die Übergabevorrichtung hindurchtransportiert werden kann.

Um Verschleiß an der Übergabevorrichtung zu verringern, sind insbesondere Bereiche, die im normalen Betrieb ständig und planmäßig mit Fräsgut in Kontakt kommen, vom vergleichsweise verschleißarmen Traggestell gebildet. So ist es bevorzugt, dass eine von der horizontalen zur vertikalen Richtung des Fräsguttransportes überleitende Kante der Übergabevorrichtung vom Traggestell gebildet ist. Diese Kante liegt auf der Innenseite der Übergabevorrichtung und insbesondere in der Kniekehle der rohrknieförmigen Übergabevorrichtung. Im Betrieb der Bodenfräsmaschine rutscht ständig Fräsgut aus dem horizontalen Abschnitt der Übergabevorrichtung über die Kante in den vertikalen Abschnitt, wodurch insbesondere an dieser Stelle eine verstärkte Abrasion eintritt. Durch die Ausbildung der Kante über das Traggestell, welches ein härteres und daher verschleißärmeres Material als die Verkleidung umfasst, wird dem Verschleiß der Übergabevorrichtung entgegengewirkt.

Eine vorteilhafte Weiterbildung sieht ferner vor, dass die Bandaufhängung über Gelenke, insbesondere umfassend Gelenkachsen, mit einem Rahmen des Verladeförderbandes verbunden ist, wobei die Gelenkachsen im Wesentlichen innerhalb der Erstreckung der Verladeförderbande entlang der Schwenkachse d.h. innerhalb der Breite des Verladeförderbandes (Erstreckung horizontal und senkrecht zur Förderrichtung) positioniert sind. Mit anderen Worten: Die, bevorzugt als als Schwinge ausgebildete, Bandaufhängung ist vergleichsweise schmal ausgebildet und umgreift nicht den Rahmen des Verladeförderbandes als Ganzes, sondern weist bevorzugt in Vertikalrichtung ausschließlich oberhalb des Tragrahmens und/oder des Obertrums des Verladeförderbandes verlaufende Haltearme auf, die in am Rahmen des Verladeförderbandes angeordnete und in Vertikalrichtung nach oben vorstehende Haltelaschen eingreifen. Die Gelenkverbindung kann dabei beispielsweise über Achsbolzen erfolgen, wobei diese im Wesentlichen, d.h. bevorzugt zu wenigsten 90% ihrer Erstreckung entlang der Schwenkachse, innerhalb der Erstreckung des Rahmens des Verladeföderbandes in Richtung der Schwenkachse liegen.

Schließlich wird die eingangs genannte Aufgabe ebenfalls gelöst durch eine Bodenfräsmaschine, insbesondere eine Straßenfräse, mit einer vorstehend beschriebenen Materialübergabevorrichtung. Sämtliche genannten Merkmale, Wirkungen und Vorteile der erfindungsgemäßen Materialübergabevorrichtung gelten im übertragenen Sinne ebenfalls für die erfindungsgemäße Bodenfräsmaschine. Es wird daher zur Vermeidung von Wiederholungen auf die entsprechenden Ausführungen Bezug genommen.

Die Erfindung wird nachstehend anhand der in den Figuren gezeigten Ausführungsbeispiele näher erläutert. Es zeigen schematisch:
- Figur 1:: eine Seitenansicht einer Bodenfräsmaschine;
- Figur 2:: eine perspektivische Seitenansicht einer Materialübergabevorrichtung;
- Figur 3:: eine Detailansicht der Materialübergabevorrichtung von schräg links hinten;
- Figur 4:: eine Detailansicht der Materialübergabevorrichtung von der Seite;
- Figur 5:: eine Detailansicht der Materialübergabevorrichtung von oben;
- Figur 6:: eine Schnittansicht durch die Materialübergabevorrichtung in der Perspektive aus Figur 3;
- Figur 7:: eine Schnittansicht durch die Materialübergabevorrichtung von oben;
- Figur 8:: eine Schnittansicht durch die Materialübergabevorrichtung von der Seite;
- Figur 9:: eine perspektivische Ansicht der Übergabevorrichtung von schräg oben links vorne bei teilweise entfernter Verkleidung;
- Figur 10:: eine perspektivische Ansicht der Übergabevorrichtung von schräg unten links hinten bei teilweise entfernter Verkleidung;
- Figur 11:: eine perspektivische Seitenansicht der Materialübergabevorrichtung von schräg links hinten bei um die vertikale Schwenkachse verschwenktem und um die horizontale Schwenkachse nach oben geschwenktem Verladeförderband; und
- Figur 12:: eine perspektivische Seitenansicht der Materialübergabevorrichtung von schräg links hinten bei um die vertikale Schwenkachse verschwenktem und um die horizontale Schwenkachse nach unten geschwenktem Verladeförderband.

Gleiche beziehungsweise gleich wirkende Bauteile sind mit den gleichen Bezugszeichen bezeichnet. Sich wiederholende Bauteile sind nicht in jeder Figur gesondert bezeichnet.

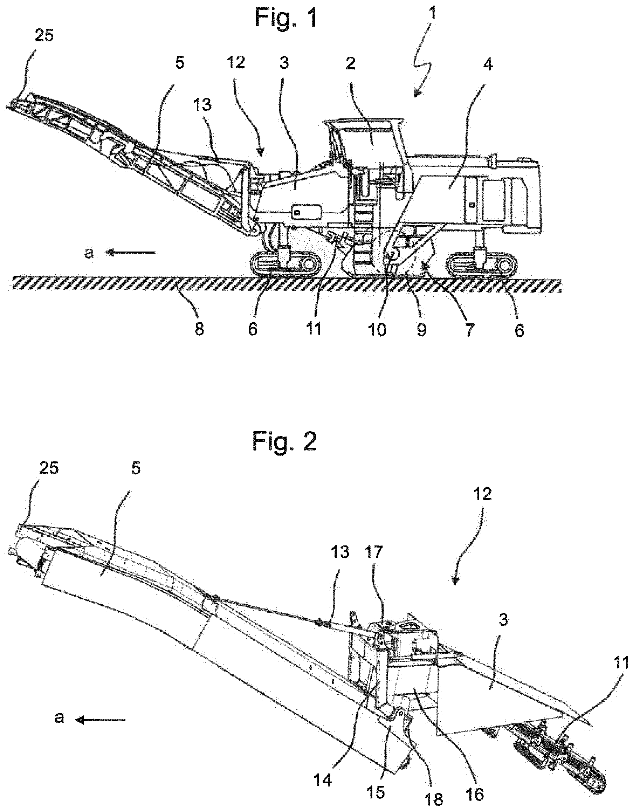

Figur 1 zeigt eine gattungsgemäße Bodenfräsmaschine 1, hier eine Straßenfräse vom Typ Großfräse beziehungsweise Mittelrotorfräse. Die Erfindung betrifft aber auch andere Typen von Bodenfräsmaschinen, wie beispielsweise alternative zu der in Fig.1 gezeigten Frontladerfräse Heckladerfräsen und/oder auch Heckrotorfräsen, insbesondere vom Typ Kompaktfräse. Die Bodenfräsmaschine 1 weist einen Maschinenrahmen 3 mit Fahrwerken 6 auf, die vorliegend als Kettenlaufwerke ausgebildet sind, allerdings genauso gut Räder sein könnten. Ein Bediener steuert die Bodenfräsmaschine 1 vom Fahrerstand 2 aus. Zum Antrieb der Bodenfräsmaschine 1 ist ein Antriebsmotor 4, beispielsweise ein Dieselverbrennungsmotor, vorgesehen. Im Arbeitsbetrieb der Bodenfräsmaschine 1 bewegt sich diese mit den Fahrwerken 6 in Arbeitsrichtung a über den Boden 8. In einem Fräswalzenkasten 7 ist eine Fräswalzen 9 um eine Rotationsachse 10 rotierbar gelagert. Die Fräswalze 9 ist mit Fräsmeißeln bestückt, die durch die Rotation der Fräswalze 9 den Boden 8 abfräsen. Darüber hinaus weist die Bodenfräsmaschine 1 eine Materialübergabevorrichtung 12 auf. Die wesentlichen Bestandteile der Materialübergabevorrichtung 12 sind ebenfalls nochmals in Figur 2 gezeigt, dort allerdings in erfindungsgemäßer Ausführung. Das vom Boden aufgefräste und gelöste Fräsgut wird aus dem Fräswalzenkasten 7 durch eine in Fig. 1 nicht dargestellte Öffnung innerhalb des Fräswalzenkastens 7 herausgeschleudert und/oder -geschaufelt und von einem Übergabeförderband 11 aufgenommen, welches das Fräsgut beispielsweise in Arbeitsrichtung a nach vorne transportiert. Im vorderen Bereich der Bodenfräsmaschine 1 wird das Fräsgut vom Übergabeförderband 11 auf ein Verladeförderband 5 übergeben, welches das Fräsgut bis zu einem Abwurfpunkt 25 transportiert, an dem das Fräsgut das Verladeförderband verlässt und beispielsweise auf ein nicht gezeigtes Transportfahrzeug zum Abtransport geworfen wird.

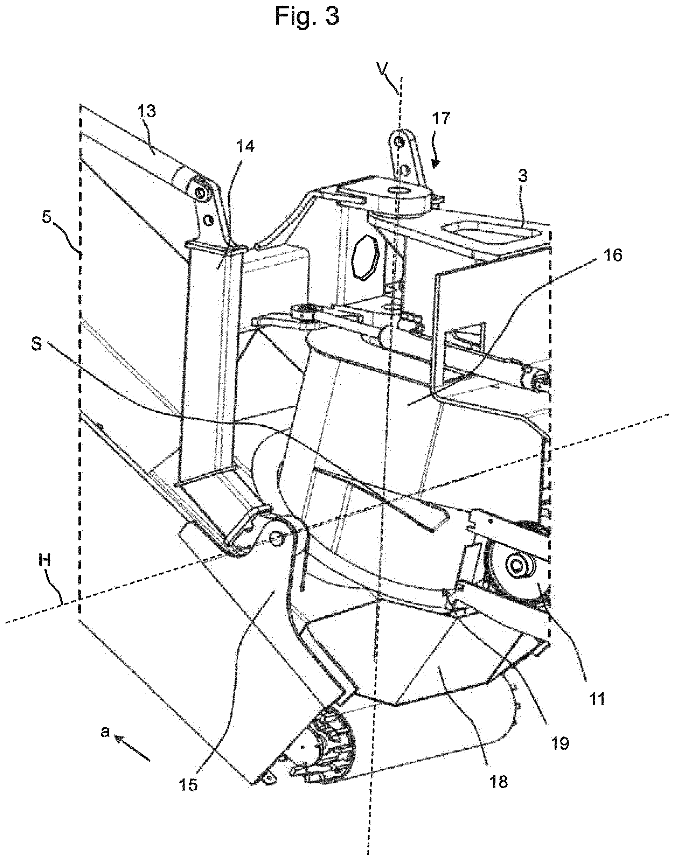

Das Verladeförderband 5 weist eine Bandaufhängung 14 auf, über die das Verladeförderband 5 zum einen an einer Bandlagerung 17 mit dem Maschinenrahmen 3 der Bodenfräsmaschine 1 verbunden ist. Die Bandlagerung 17 ist dabei derart geschaffen, dass die Bandaufhängung 14 und das Verladeförderband 5 um eine vertikale Schwenkachse V (siehe beispielsweise Figur 3) verschwenkbar am Maschinenrahmen 3 gelagert sind, wie nachstehend noch näher erläutert wird. Für diese Verschwenkung um die vertikale Schwenkachse V ist eine nicht näher gezeigte Verstelleinrichtung, die beispielsweise hydraulisch betrieben ist, vorgesehen. Das Verladeförderband 5 ist darüber hinaus, beispielsweise über einen Schwenkhebel 15, um eine horizontale Schwenkachse H (siehe beispielsweise Figur 3) in Vertikalrichtung schwenkbar an der Bandaufhängung 14 gelagert. Auch für diese Verschwenkung um die horizontale Schwenkachse H ist eine Verstelleinrichtung 13 vorgesehen, die ebenfalls beispielsweise hydraulisch betrieben sein kann. Durch die Verschwenkung des Verladeförderbandes 5 um die horizontale Schwenkachse H und die vertikale Schwenkachse V kann der Abwurfpunkt 25 an unterschiedliche Seiten- und Höhenpositionen des Transportfahrzeuges, verschiedenen Relativlagen der Bodenfräsmaschine und des Transportfahrzeuges etc. zum Abtransport des Fräsgutes angepasst werden. Der Schwenkbereich um beide Achsen V und H ist baulich begrenzt, beispielsweise durch Elemente des Maschinenrahmens der Bodenfräsmaschine etc. Die Verstellbarkeit des Verladeförderbandes 5 relativ zur übrigen Maschine ermöglicht beispielsweise die individuelle Anpassung des Abwurfpunktes des Verladeförderbandes 5 an spezifische Verladesituationen, beispielsweise variierenden Transportbehälterhöhen und/oder Transportbehälterabständen.

Die Ausbildung der Materialübergabevorrichtung 12, die einen möglichst verlustfreien und emissionslosen Transport des Fräsgutes, insbesondere vom Übergabeförderband 11 auf das Verladeförderband 5, gewährleistet, wird nachstehend anhand der Figuren 3 bis 8 näher erläutert. Erfindungsgemäß sind für den Transport beziehungsweise das Leiten des Fräsgutes vom Übergabeförderband 11 zum Verladeförderband 5 lediglich zwei Elemente vorgesehen, konkret eine Übergabevorrichtung 16, die das Fräsgut vom Übergabeförderband 11 aufnimmt, und eine Aufnahmevorrichtung 18, die das Fräsgut von der Übergabevorrichtung 16 zugeleitet bekommt und dafür sorgt, dass das Fräsgut möglichst verlustfrei auf das Verladeförderband 5 übertragen wird. Ein Kerngedanke der Erfindung liegt darin, die Übergabevorrichtung 16, die Aufnahmevorrichtung 18 sowie die vertikale Schwenkachse V und die horizontale Schwenkachse H derart zueinander anzuordnen, dass eine vorteilhafte Übergabe zwischen dem Übergabeförderband 11 und dem Verladeförderband 5 im gesamten Betrieb der Bodenfräsmaschine 1 gelingt, also bei sämtlichen möglichen Schwenkstellungen des Verladeförderbandes 5 um die Achsen V, H.

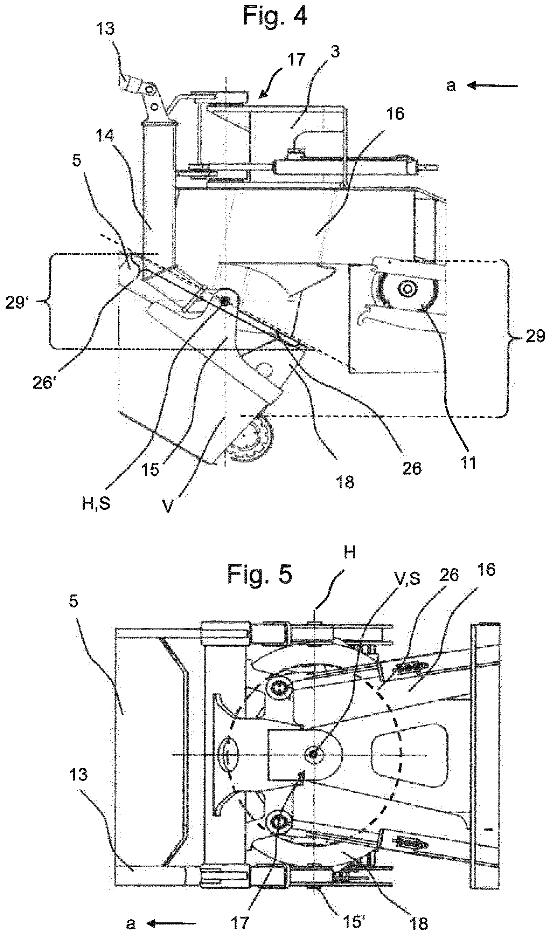

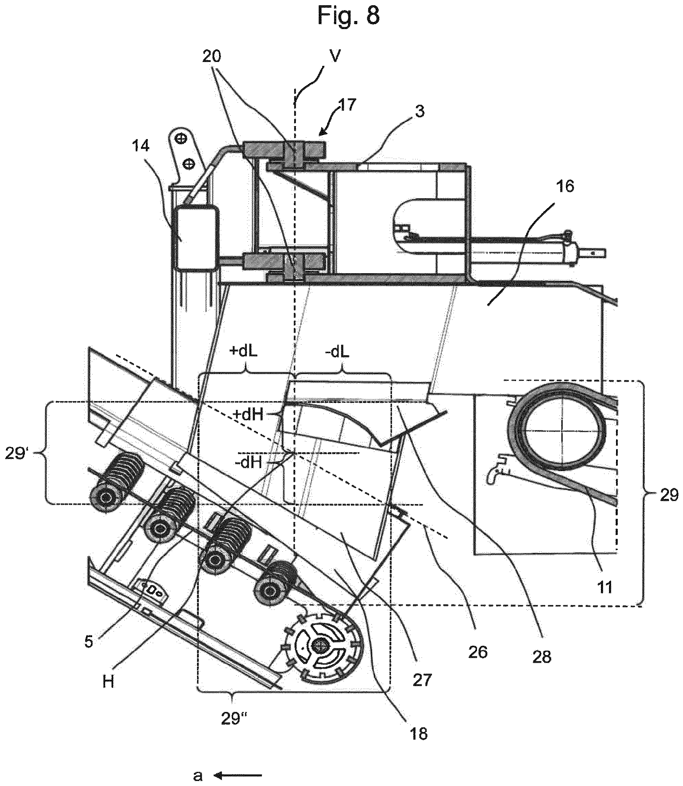

Die Aufnahmevorrichtung 18 ist als starres Gehäuse ausgebildet und am Verladeförderband 5 angeordnet. Sie weist an ihrer vom Verladeförderband 5 weg weisenden Seite einen Gehäusedeckel auf, in dem eine Aufnahmeöffnung 19 bzw. Durchtrittsöffnung angeordnet ist. Die Aufnahmeöffnung 19 kann als ebene und/oder kreisrunde Ausnehmung in der Aufnahmevorrichtung 18 ausgebildet und von einem in einer Ebene liegenden und/oder kreisrunden Rand begrenzt sein. Die diesen Rand beziehungsweise diese Aufnahmeöffnung 19 überspannende theoretische Fläche wird als Eintrittsfläche 26 (siehe Figuren 4 und 8) bezeichnet. Die Eintrittsfläche 26 ist im gezeigten Ausführungsbeispiel eine Ebene. Sie bezeichnet diejenige Grenzfläche, die das Fräsgut passieren muss, um sich in der Aufnahmevorrichtung 18 zu befinden. Diese Grenzfläche muss nicht eben sein. Sie kann insbesondere auch gebogen oder in sonstiger Weise dreidimensional verformt sein. Die Fläche bestimmt sich dann durch in Richtung der horizontalen Schwenkachse quer zur Förderrichtung des Übergabeförderbandes verlaufende Verbindungsgeraden der einander gegenüberliegenden Endpunkte des die Aufnahmeöffnung begrenzenden Randes. Die Erstreckung der Eintrittsfläche 26 senkrecht zur Schwenkachse H ist in Fig. 4 mit 26' angegeben. Wie insbesondere in Figur 4 ersichtlich ist, ist das Verladeförderband 5 derart an den Maschinenrahmen 3 der Bodenfräsmaschine 1 angehängt, dass die horizontale Schwenkachse H ebenfalls durch die bzw. entlang der Eintrittsfläche 26 verläuft beziehungsweise in dieser liegt. Um die horizontale Schwenkachse H des Verladeförderbandes 5 gegenüber der konventionellen Anordnung auf Höhe der hinteren Umlenkrolle des Verladeförderbandes 5 in Vertikalrichtung weiter nach oben zu verlagern, ist am Verladeförderband 5 ein Schwenkhebel 15 in Form von Traglaschen angeordnet, der starr mit dem Tragrahmen 15" des Verladeförderbandes 5 verbunden ist. Der Schwenkhebel 15 steht in Vertikalrichtung über den Obertrum des Verladeförderbandes vor und reicht in Vertikalrichtung hinauf bis auf im Wesentlichen die Höhe der Eintrittsfläche 26. Auf Höhe der Eintrittsfläche 26 ist der Schwenkhebel 15 verschwenkbar an einem Arm der als Schwinge ausgebildeten Bandaufhängung 14 gelagert. Eine derartige Konstruktion mit Schwenkhebel 15 und Anlenkung an einem Arm der Bandaufhängung 14 findet sich auf beiden Seiten des Verladeförderbandes 5 senkrecht zur Arbeitsrichtung a, wie beispielsweise aus den Figuren 5, 6 und 7 hervorgeht.

Die beiden Schwenklager der Schwenkhebel 15 an der Bandaufhängung 14 definieren die horizontale Schwenkachse H. Diese liegt, bezogen auf die Vertikalrichtung, in einem Bereich 29 (siehe Figuren 4 und 8) zwischen dem Verladeförderband 5 und dem Übergabeförderband 11. Genauer reicht der Bereich 29 vom in Arbeitsrichtung a der Bodenfräsmaschine 1 beziehungsweise in Förderrichtung des Fräsgutes auf dem Verladeförderband 5 hinteren Ende des Obertrums des Verladeförderbandes 5 bis zum in Arbeitsrichtung a der Bodenfräsmaschine 1 beziehungsweise in Förderrichtung des Fräsgutes auf dem Übergabeförderband 11 vorderen Ende des Obertrums des Übergabeförderbands 11. Der Bereich 29 erstreckt sich somit in Vertikalrichtung von der maximalen vertikalen Höhe des Obertrums des Übergabeförderbandes 11 in Vertikalrichtung nach unten bis zur minimalen vertikalen Höhe des Obertrums des Verladeförderbandes. Erfindungsgemäß verläuft die Schwenkachse H in Vertikalrichtung nun derart, dass sie auf Höhe der Erstreckung der Aufnahmeöffnung 19 der Aufnahmevorrichtung 18 in Vertikalrichtung oder darüber angeordnet ist. Mit 29' ist in den Figuren 4 und 8 dazu die Erstreckung der Aufnahmeöffnung 19 in Vertikalrichtung angegeben. Dieser Erstreckungsbereich ist durch den in Vertikalrichtung niedrigsten und höchsten Punkt definiert. In Arbeitsrichtung a beziehungsweise in Transportrichtung des Fräsgutes auf dem Verladeförderband 5 bzw. in Horizontalrichtung und senkrecht zur Schwenkachse ist die horizontale Schwenkachse H darüber hinaus bevorzugt in einem Bereich 29" (Fig. 8) angeordnet, der durch die in diese Richtung äußeren Endpunkt der Aufnahmeöffnung 19 definiert wird. Dadurch wird in einer virtuellen Referenzebene senkrecht zur Schwenkachse H somit ein durch die Ausbildung der Aufnahmeöffnung 19 definiertes rechteckiges Positionierungsareal erhalten (in Fig. 8 strichliert angegeben), innerhalb dessen die Schwenkachse H bevorzugt positioniert ist. Ideal ist die Schwenkachse H derart positioniert, dass sie in der Öffnungsebene der Aufnahmeöffnung 19 die Vertikalachse V schneidend verläuft. Durch diese Anordnung der horizontalen Schwenkachse H bezüglich der Aufnahmeöffnung 19 bewegt sich die Aufnahmeöffnung 19 bei einer Verschwenkung des Verladeförderbandes 5 um die horizontale Schwenkachse H besonders wenig bzw. vergleichsweise gleichmäßig gegenüber dem Übergabeförderband 11 und damit ebenfalls der Übergabevorrichtung 16, wodurch beispielsweise die Abdichtung zwischen den beiden Bändern besonders gut über den gesamten Verstellbereich hinweg vergleichsweise gut aufrecht erhalten werden kann, was letztlich zu einer besonders verlustfreien Übertragung des Fräsgutes zwischen den Förderbändern 11, 5 führt. Dass sich das in Arbeitsrichtung a beziehungsweise in Transportrichtung des Fräsgutes hinten liegende Ende des Verladeförderbandes 5, beispielsweise im Bereich der hinteren Umlenkrolle, dafür stärker bewegt als im Stand der Technik, ist weniger relevant und bringt keine Nachteile mit sich, da hier typischerweise sowieso genügend Platz für die entsprechende Bewegung vorhanden ist.

Insbesondere die Fig. 8 verdeutlicht dabei, dass der Anordnungsbereich der horizontalen Schwenkachse "in der Durchtrittsfläche" bevorzugt so gewählt wird, dass die Schwenkachse tatsächlich geometrisch exakt in der Ebene der Durchtrittsfläche liegt. Die Erfindung umfasst aber auch solche Ausführungsformen, die zu dieser Ebene eine leichte Abweichung aufweisen. Dies ist in Fig. 8 durch die Bereichsangaben +/-dL in Förderrichtung des Übergabeförderbandes bzw. in Arbeitsrichtung a und +/-dH in Vertikalrichtung in Bezug auf den Mittelpunkt der Durchtrittsfläche veranschaulicht. "Im Wesentlichen in der Durchtrittsfläche" ist demnach so zu verstehen, dass die horizontale Schwenkachse vorzugsweise in einem Bereich von kleiner/gleich +dL und/oder -dL liegt, wobei dL insbesondere 12cm, insbesondere 5cm, in Horizontalrichtung nach vorn und/oder nach hinten ausgehend von der Lage des Mittelpunktes der Durchtrittsfläche bedeutet. Ergänzend oder alternativ bedeutet "im Wesentlichen in der Durchtrittsfläche", dass die horizontale Schwenkachse vorzugsweise in einem Bereich von kleiner/gleich +dH und/oder -dH liegt, wobei dH insbesondere 12cm, insbesondere 5cm, in Vertikalrichtung nach oben und/oder nach unten ausgehend von der Lage des Mittelpunktes der Durchtrittsfläche bedeutet. Insbesondere liegt der Schnittpunkt der horizontalen und der vertikalen Schwenkachse in diesem Bereich.

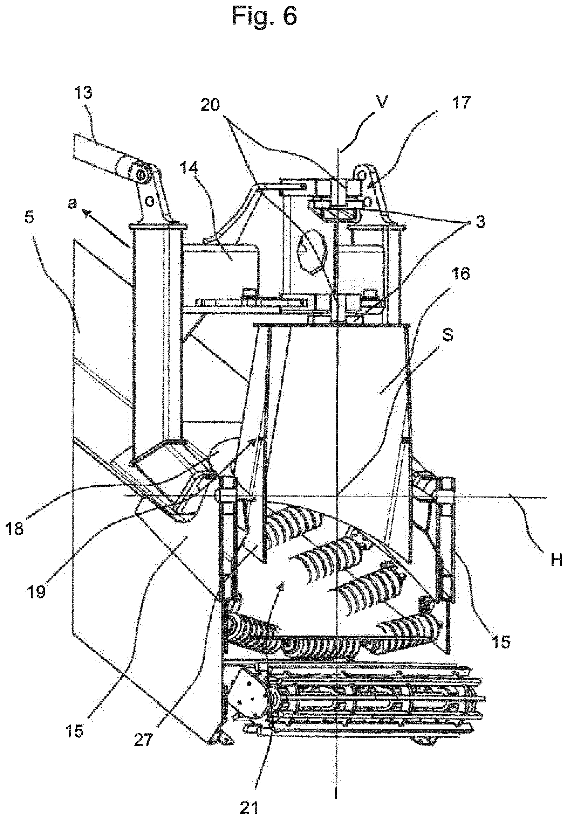

Die vertikale Schwenkachse V wird durch die Lagerung der das Verladeförderband 5 tragenden Bandaufhängung 14 am Maschinenrahmen 3 der Bodenfräsmaschine 1 definiert. Die resultierende Bandlagerung 17 umfasst jeweils zwei Lageraugen der Bandaufhängung 14 und des Maschinenrahmens 3, wobei jeweils ein Lagerauge der Bandaufhängung 14 und des Maschinenrahmens 3 vertikal übereinander angeordnet sind und durch einen vertikal verlaufenden und durch die beiden Lageraugen hindurchgesteckt Bolzen 20 (siehe Figuren 6 und 8) drehbar aneinander fixiert sind. Auf diese Weise kann die Bandaufhängung 14 zusammen mit dem Verladeförderband 5 und der Aufnahmevorrichtung 18 um die vertikale Schwenkachse V verschwenkt werden. Die Bandlagerung 17 und die vertikale Schwenkachse V sind bevorzugt derart angeordnet, dass die vertikale Schwenkachse V durch die Mitte der Aufnahmeöffnung 19 verläuft. Die Mitte der Aufnahmeöffnung 19 bezeichnet insbesondere den geometrischen Schwerpunkt der auf eine horizontale Ebene projizierten Aufnahmeöffnung 19, vorliegend also beispielsweise den Kreismittelpunkt der kreisrunden Aufnahmeöffnung 19. Auf diese Weise ändert sich die Lage der Aufnahmeöffnung 19 in Bezug auf das Übergabeförderband 11 und damit ebenfalls auf die Übergabevorrichtung 16 bei einer Verschwenkbewegung des Verladeförderbandes 5 um die vertikale Schwenkachse V nicht oder zumindest nur in einem winzigen Toleranzbereich. Optimal wird der Effekt der Erfindung dann, wenn, wie im gezeigten Ausführungsbeispiel, sich die horizontale Schwenkachse H und die vertikale Schwenkachse V in einem Schnittpunkt S schneiden. Dieser Schnittpunkt S liegt ebenfalls bevorzugt in der Mitte der Aufnahmeöffnung 19 beziehungsweise im Kreismittelpunkt der kreisrunden Aufnahmeöffnung 19. Durch diese gemeinsame Anordnung der beiden Achsen H, V liegt wenn überhaupt bei einer beliebigen Verschwenkung des Verladeförderbandes 5 nur eine äußerst geringe und im Wesentlichen vernachlässigbare Bewegung der Aufnahmeöffnung 19 gegenüber dem Übergabeförderband 11 beziehungsweise der Übergabevorrichtung 16 vor.

Die gezeigte Ausführungsform wird beispielsweise dadurch ebenfalls besonders kompakt, dass die Übergabevorrichtung 16 an ihrer in Vertikalrichtung oben liegenden Seite ebenfalls über die Bandlagerung 17 ortsfest bezüglich des Verladeförderbandes 5 am Maschinenrahmen 3 befestigt ist (siehe ebenfalls Figuren 6 und 8). Insbesondere ist die Übergabevorrichtung 16 ebenfalls über einen der Bolzen 20 der Bandlagerung 17 zusammen mit der Bandaufhängung 14 am Maschinenrahmen 3, speziell an einem der Lageraugen des Maschinenrahmens 3, fixiert. Auch durch diese Maßnahme wird die Anzahl der benötigten Bauteile reduziert, was Kosten senkt und Verschleiß verringert.

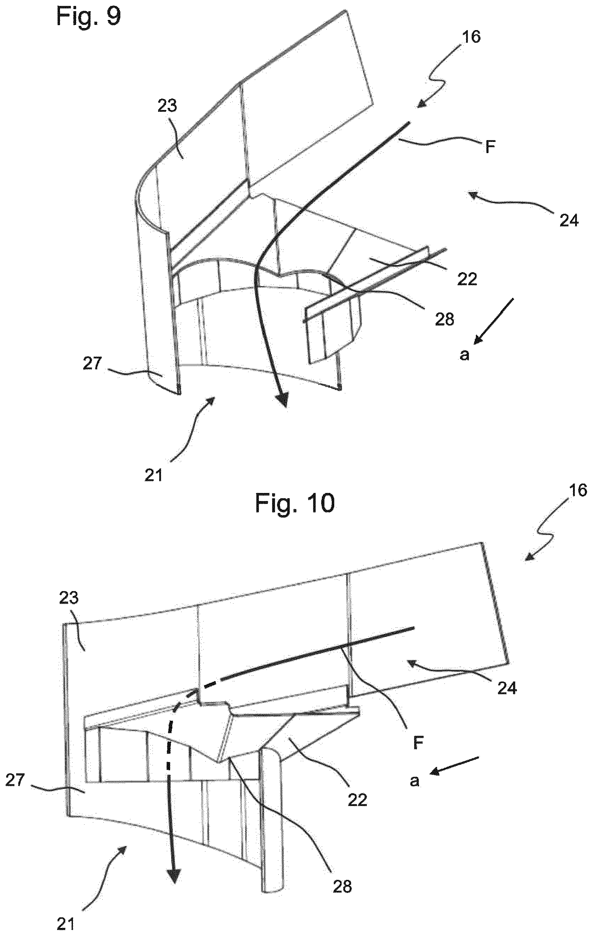

Der Aufbau der Übergabevorrichtung 16 wird nachstehend anhand der Figuren 9 und 10 erläutert. In diesen Figuren sind Teile der äußeren Verschalung der Übergabevorrichtung 16 weggelassen worden, um insbesondere auch das Innenleben veranschaulichen zu können. Grundsätzlich hat die Übergabevorrichtung 16 die Form und die Funktion eines Rohrknies. Sie weist einen Übergabeeingang 24 auf, durch den hindurch Fräsgut vom Übergabeförderband 11 kommend in die Übergabevorrichtung 16 eintritt. Innerhalb der Übergabevorrichtung 16 wird das Fräsgut dann in Arbeitsrichtung a nach vorne transportiert und fällt dann an der Kante 28 der Schwerkraft folgend in Vertikalrichtung nach unten, bis es die Übergabevorrichtung 16 durch den Übergabeausgang 21 verlässt. Die Transportrichtung des Fräsgutes durch die Übergabevorrichtung 16 ist in den Figuren 9 und 10 mit dem Pfeil F dargestellt. Bei dem Übergabeeingang 24 und dem Übergabeausgang 21 handelt es sich um die einzigen Öffnungen in der ansonsten vollständig nach außen hin geschlossenen Übergabevorrichtung 16. Die Übergabevorrichtung 16 umfasst ein aus einem starren Material hergestelltes Traggestell 22 und eine zumindest teilweise elastische Verkleidung 23. Die Verkleidung 23 wird insbesondere vom Traggestell 22 aufgespannt und in der Form der Übergabevorrichtung 16 gehalten, wobei hier ebenfalls noch die Fixierung der Oberseite der Verkleidung 23 am Bolzen 20 der Bandlagerung 17 beiträgt. Da der vertikal untere Eintrittsbereich der Übergabevorrichtung 16 und insbesondere ebenfalls die Kante 28 im Betrieb der Bodenfräsmaschine 1 und der Materialübergabevorrichtung 12 am stärksten im Kontakt mit dem Fräsgut stehen, ist sowohl der in Vertikalrichtung unten liegende Eintrittsbereich der Übergabevorrichtung 16 als auch die Kante 28, über die das Fräsgut von einer im Wesentlichen horizontalen zu einer im Wesentlichen vertikalen Bewegung übergeht, auf der Innenseite der Übergabevorrichtung 16 durch das Traggestell 22 gebildet beziehungsweise ausgekleidet. Da das Traggestell 22 gegenüber der Verkleidung 23 verschleißfester ist, wird auf diese Weise eine Beschädigung der Übergabevorrichtung 16 auch bei langen Standzeiten verhindert.

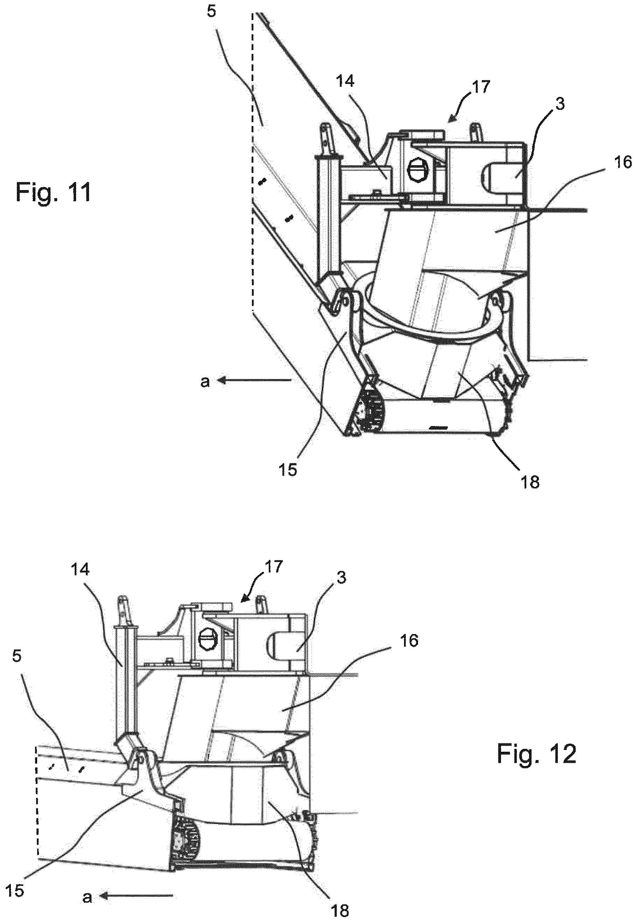

Ein weiteres wichtiges Merkmal der Übergabevorrichtung 16 ist, dass diese in Vertikalrichtung nach unten eine Überlänge 27 aufweist. Die Überlänge 27 kommt dadurch zustande, dass die Übergabevorrichtung 16 in Vertikalrichtung nach unten länger ist, als sie sein müsste, um das Fräsgut lediglich bis zur Aufnahmeöffnung 19 der Aufnahmevorrichtung 18 zu leiten. Durch die Überlänge 27 befindet sich der Übergabeausgang 21 in Vertikalrichtung unter der Aufnahmeöffnung 19 der Aufnahmevorrichtung 18. Die Übergabevorrichtung 16 ragt also in die Aufnahmevorrichtung 18 durch die Aufnahmeöffnung 19 hinein. Insbesondere liegt die Überlänge 27 im Innenraum der Aufnahmevorrichtung 18. Dies geht beispielsweise ebenfalls aus den Figuren 6 und 8 hervor. Durch die jeweilige Lage in Vertikalrichtung der Aufnahmeöffnung 19 und in Relation dazu des Übergabeausgangs 21 ergibt sich ein Überlappungsbereich, in dem das Fräsgut sich sowohl in der Übergabevorrichtung 16 als auch der Aufnahmevorrichtung 18 befindet und von beiden Vorrichtungen 16, 18 zumindest seitlich und in Arbeitsrichtung a nach hinten gegenüber der Außenumgebung abgeschirmt ist. Der Überlappungsbereich erstreckt sich daher in Vertikalrichtung von einem durch den Übergabeausgang 21 definierten unteren Ende bis zu einem von der Aufnahmeöffnung 19 beziehungsweise der Eintrittsfläche 26 definierten oberen Ende. Die Ausdehnung des Überlappungsbereichs und insbesondere auch die Ausdehnung der Überlänge 27 ist dabei so gewählt, dass der Übergabeausgang 21 bei allen möglichen Verschwenkpositionen des Verladeförderbandes 5 um die horizontale Schwenkachse H und die vertikale Schwenkachse V immer in Vertikalrichtung unter der AufnahmeÖffnung 19 beziehungsweise der Eintrittsfläche 26 der Aufnahmevorrichtung 18 liegt. Es ist daher unmöglich, dass das vertikal untere Ende der Übergabevorrichtung 16 durch eine Verschwenkbewegung des Verladeförderbandes 5 aus der Aufnahmevorrichtung 18 herausgezogen wird. Es können daher im Betrieb der erfindungsgemäßen Materialübergabevorrichtung 12 keine Lücken entstehen, durch die Fräsgut, Staub oder Lärm nach außen dringen und umstehende Personen gefährden können. Dies ist insbesondere in den Figuren 11 und 12 gezeigt, in denen das Verladeförderband 5 jeweils seitlich um die vertikale Schwenkachse V verschwenkt ist (im gezeigten Ausführungsbeispiel um ca. 65°). In Figur 11 ist das Verladeförderband 5 zusätzlich um die horizontale Schwenkachse H nach oben verschwenkt, in Figur 12 dagegen nach unten. Insbesondere in diesen Positionen mit doppelter Verschwenkung klaffen im Stand der Technik oftmals Verhängungen auseinander, so dass Fräsgut austreten kann. Wie aus den Figuren hervorgeht, wird dies erfindungsgemäß effizient vermieden, wobei die gezeigte Materialübergabevorrichtung 12 besonders kompakt ist, nur wenige Bauteile erfordert, und insgesamt besonders kostengünstig herstellbar ist.

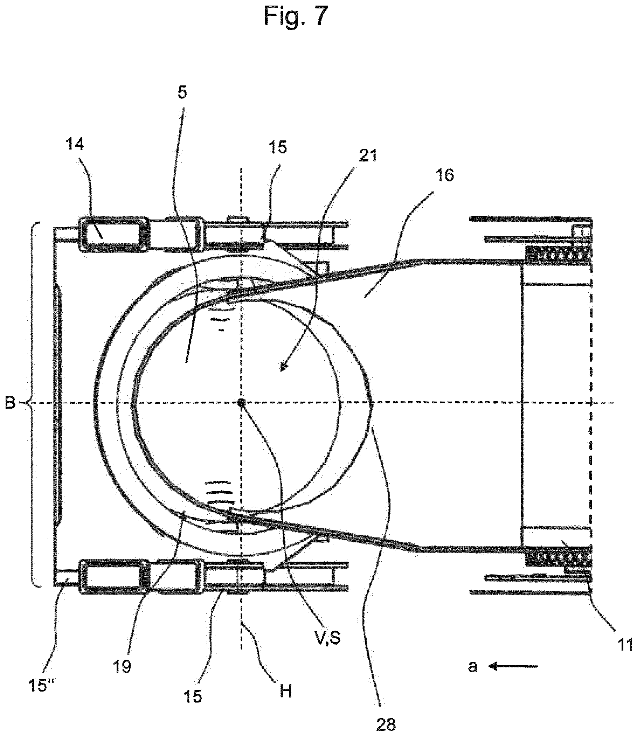

Insbesondere die Figuren 4, 5 und 7 verdeutlichen ferner einen weiteren vorteilhaften Aspekt der Erfindung. Fig. 4 zeigt, dass die Bandaufhängung 14 bzw. gegenüber dem Maschinenrahmen 3 der Bodenfräsmaschine 1 schwenkbare Halterahmen vollständig in Vertikalrichtung oberhalb des Obertrums des Verladeförderbandes angeordnet ist. Die Anbindung an das Verladeförderband erfolgt über die vom Rahmen des Verladeförderbandes in Vertikalrichtung aufragenden Schwenkhebel 15, mit denen die Bandaufhängung 14 über in Richtung der Schwenkachse H verlaufende Gelenkbolzen 15' verbunden ist. Insbesondere Fig. 5 verdeutlicht dabei, dass die Bandaufhängung und insbesondere die Gelenkachsen dabei im Wesentlichen innerhalb der Breite B (Fig. 7) des Verladeförderbandes bzw. der Erstreckung des Tragrahmens 15" Verladeförderbandes in Richtung der Schwenkachse H liegen. Im Gegensatz zu konventionellen Bandaufhängungen umgreift diese somit nicht den Rahmen des Verladeförderbandes, sondern ist durch die Anordnung ausschließlich oberhalb des Rahmens des Verladeförderbandes ausgebildet. Dabei wird eine vergleichsweise schmale Gesamtausbildung erhalten, weil die Gelenkelemente zwischen der Bandaufhängung und dem Rahmen des Verladeförderbandes in Richtung der Schwenkachse gesehen nicht mehr hintereinander liegen, sondern nebeneinander bzw. in Vertikalrichtung übereinander. Auch dies ist nur mithilfe der vorstehend beschriebenen hochgelagerten Schwenkachse möglich.

## Patentansprüche

1. Materialübergabevorrichtung (12) zur Übergabe von Fräsgut für eine Bodenfräsmaschine (1), mit
- einem Verladeförderband (5) zum Abwurf des Fräsguts,
- einem Übergabeförderband (11) zum Transport des Fräsguts auf das Verladeförderband (5), und
- einer Übergabevorrichtung (16) zur Überladung des Fräsguts vom Übergabeförderband (11) in eine Aufnahmeöffnung (19) einer Aufnahmevorrichtung (18) des Verladeförderbands (5),
wobei das Verladeförderband (5) um eine vertikale Schwenkachse (V) und um eine horizontale Schwenkachse (H) schwenkbar gelagert ist,
**dadurch gekennzeichnet,**
**dass** die horizontale Schwenkachse (H) in derjenigen Vertikalebene, in der die horizontale Schwenkachse (H) liegt, in Vertikalrichtung über dem Verladeförderband (5) und in einem Bereich (29') in Vertikalrichtung, der zwischen einem in Vertikalrichtung unteren und einem in Vertikalrichtung oberen Maximalpunkt der Aufnahmeöffnung (19) definiert wird, oder darüber angeordnet ist.

2. Materialübergabevorrichtung (12) nach Anspruch 1,
**dadurch gekennzeichnet,**
**dass** die horizontale Schwenkachse (H) in Vertikalrichtung unter dem Übergabeförderband (11) angeordnet ist.

3. Materialübergabevorrichtung (12) nach einem der vorhergehenden Ansprüche,
**dadurch gekennzeichnet,**
**dass** die horizontale Schwenkachse (H) in Vertikalrichtung auf Höhe einer Eintrittsfläche (26) der Aufnahmeöffnung (19) der Aufnahmevorrichtung (18) angeordnet ist, und/oder dass sich die vertikale Schwenkachse (V) und die horizontale Schwenkachse (H) in einem Schnittpunkt (S) schneiden.

4. Materialübergabevorrichtung (12) nach einem der vorhergehenden Ansprüche,
**dadurch gekennzeichnet,**
**dass** die Aufnahmevorrichtung (18) am Verladeförderband (5) angeordnet und als ein von diesem vertikal nach oben aufragendes und zumindest zu den Seiten und in Transportrichtung des Fräsgutes nach hinten geschlossenes Gehäuse ausgebildet ist.

5. Materialübergabevorrichtung (12) nach einem der vorhergehenden Ansprüche,
**dadurch gekennzeichnet,**
**dass** die Aufnahmeöffnung (19) am vertikal oberen Ende der Aufnahmevorrichtung (18) angeordnet ist und insbesondere polygonal, bevorzugt oval und ganz besonders bevorzugt im Wesentlichen kreisrund ausgebildet ist.

6. Materialübergabevorrichtung (12) nach einem der vorhergehenden Ansprüche,
**dadurch gekennzeichnet,**
**dass** am Verladeförderband (5) ein Schwenkhebel (15) angeordnet ist, der vertikal nach oben aufragt, und der an seiner dem Verladeförderband (5) abgelegenen Seite um die horizontale Schwenkachse (H) schwenkbar an einer Bandaufhängung (14) gelagert ist.

7. Materialübergabevorrichtung (12) nach einem der vorhergehenden Ansprüche,
**dadurch gekennzeichnet,**
**dass** die Übergabevorrichtung (16) den Transportweg des Fräsgutes vom Übergabeförderband (11) zur Aufnahmevorrichtung (18) bis auf einen Übergabeeingang (24) und einen Übergabeausgang (21) vollständig einhaust und insbesondere rohrknieförmig ausgebildet ist.

8. Materialübergabevorrichtung (12) nach einem der vorhergehenden Ansprüche,
**dadurch gekennzeichnet,**
**dass** die Übergabevorrichtung (16) in Vertikalrichtung unten eine Überlänge (27) aufweist, die derart ausgebildet ist, dass sie bis in die Aufnahmevorrichtung (18) hinein ragt und sich bis vertikal unter die Aufnahmeöffnung (19) der Aufnahmevorrichtung (18) erstreckt.

9. Materialübergabevorrichtung (12) nach Anspruch 8,
**dadurch gekennzeichnet,**
**dass** die Überlänge (27), insbesondere an ihrem vertikal unteren Ende, komplementär zur Aufnahmeöffnung (19) der Aufnahmevorrichtung (18), insbesondere polygonal, bevorzugt oval und ganz besonders bevorzugt im Wesentlichen kreisrund, ausgebildet ist.

10. Materialübergabevorrichtung (12) nach einem der Ansprüche 8 oder 9,
**dadurch gekennzeichnet,**
**dass** die Überlänge (27) derart ausgebildet ist, dass sie auch bei seitlich um die vertikale Schwenkachse (V) gegenüber dem Übergabeförderband (11), insbesondere um bis zu 55°, bevorzugt um bis zu 65°, besonders bevorzugt um bis zu 75° und ganz besonders bevorzugt um bis zu 85°, verschwenktem Verladeförderband (5) noch bis in die Aufnahmevorrichtung (18) hinein ragt, insbesondere unabhängig von einer Verschwenkung des Verladeförderbands (5) um die horizontale Schwenkachse (H).

11. Materialübergabevorrichtung (12) nach einem der vorhergehenden Ansprüche,
**dadurch gekennzeichnet,**
**dass** das Verladeförderband (5) eine Bandlagerung (17) aufweist, die insbesondere wenigstens einen Bolzen (20) umfasst, mit der das Verladeförderband (5) um die vertikale Schwenkachse (V) gegenüber dem Übergabeförderband (11) schwenkbar an einem Maschinenrahmen (3) einer Bodenfräsmaschine (1) lagerbar ist.

12. Materialübergabevorrichtung (12) nach einem der vorhergehenden Ansprüche,
**dadurch gekennzeichnet,**
**dass** die Übergabevorrichtung (16) ein formgebendes Traggestell (22) und eine fräsgutleitende Verkleidung (23) aufweist, wobei das Traggestell (22) die Verkleidung (23) stützt.

13. Materialübergabevorrichtung (12) nach Anspruch 12,
**dadurch gekennzeichnet,**
**dass** eine von der horizontalen zur vertikalen Richtung des Fräsguttransportes überleitende Kante (28) der Übergabevorrichtung (16) vom Traggestell (22) gebildet ist.

14. Materialübergabevorrichtung (12) nach einem der Ansprüche 6-13,
**dadurch gekennzeichnet,**
**dass** die Bandaufhängung (14), insbesondere Gelenkachsen der Bandaufhängung (14), in Vertikalrichtung oberhalb eines Tragrahmens (15") und/oder des Obertrums des Verladeförderbandes (5) positioniert sind, insbesondere im Wesentlichen innerhalb der Breite des Tragrahmens (15") des Verladeförderbandes (5).

15. Bodenfräsmaschine (1), insbesondere Straßenfräse, mit einer Materialübergabevorrichtung (12) nach einem der vorhergehenden Ansprüche.

## Claims

1. A material transfer apparatus (12) for transferring milled material for a ground milling machine (1), having
- a loading conveyor (5) for discharging the milled material,
- a transfer conveyor (11) for transporting the milled material onto the loading conveyor (5), and
- a transfer apparatus (16) for transferring the milled material from the transfer conveyor (11) into a receiving opening (19) of a receiving apparatus (18) of the loading conveyor (5),
wherein the loading conveyor (5) is mounted such that it can swivel about a vertical swivel axis (V) and about a horizontal swivel axis (H),
**characterized in that**
the horizontal swivel axis (H) is arranged in a vertical plane in which the horizontal swivel axis (H) lies, in the vertical direction above the loading conveyor (5), and in a region (29') in vertical direction, which is defined between or above a vertically lower and a vertically upper maximum point of the receiving opening (19).

2. The material transfer apparatus (12) according to claim 1,
**characterized in that**
the horizontal swivel axis (H) is arranged in vertical direction below the transfer conveyor (11).

3. The material transfer apparatus (12) according to any one of the preceding claims,
**characterized in that**
the horizontal swivel axis (H) is arranged in vertical direction at the level of an entrance area (26) of the receiving opening (19) of the receiving apparatus (18) and/or the vertical swivel axis (V) and the horizontal swivel axis (H) intersect at an intersection point (S).

4. The material transfer apparatus (12) according to any one of the preceding claims,
**characterized in that**
the receiving apparatus (18) is arranged on the loading conveyor (5) and is designed as a housing which projects vertically upwards from the latter and is closed at least to the sides and in the transport direction of the milled material to the rear.

5. The material transfer apparatus (12) according to any one of the preceding claims,
**characterized in that**
the receiving opening (19) is arranged at the vertically upper end of the receiving apparatus (18) and is in particular polygonal, preferably oval and more preferably essentially circular.

6. The material transfer apparatus (12) according to any one of the preceding claims,
**characterized in that**
a swivel lever (15) is arranged on the loading conveyor (5), which lever projects vertically upwards and is mounted on a conveyor suspension (14) on its side facing away from the loading conveyor (5) so as to swivel about the horizontal swivel axis (H).

7. The material transfer apparatus (12) according to any one of the preceding claims,
**characterized in that**
the transfer apparatus (16) completely encloses the transport path of the milled material from the transfer conveyor (11) to the receiving apparatus (18) except for a transfer inlet (24) and a transfer outlet (21) and is designed in particular in the shape of a pipe elbow.

8. The material transfer apparatus (12) according to any one of the preceding claims,
**characterized in that**
the transfer apparatus (16) has an overlength (27) in vertical direction at the bottom, which is configured such that it projects into the receiving apparatus (18) and extends vertically below the receiving opening (19) of the receiving apparatus (18).

9. The material transfer apparatus (12) according to claim 9,
**characterized in that**
the overlength (27), in particular at its vertically lower end, is complementary to the receiving opening (19) of the receiving apparatus (18), in particular polygonal, preferably oval and more preferably essentially circular.

10. The material transfer apparatus (12) according to any one of claims 8 or 9,
**characterized in that**
the overlength (27) is configured such that it still projects into the receiving apparatus (18) even when the loading conveyor (5) is swiveled laterally about the vertical swivel axis (V) relative to the transfer conveyor (11), in particular by up to 55°, preferably by up to 65°, more preferably by up to 75° and still more preferably by up to 85°, in particular independently of a swiveling of the loading conveyor (5) about the horizontal swivel axis (H).

11. The material transfer apparatus (12) according to any one of the preceding claims,
**characterized in that**
the loading conveyor (5) has a conveyor mount (17) which in particular comprises at least one pin (20), by means of which the loading conveyor (5) can be mounted on a machine frame (3) of a ground milling machine (1) such that it can swivel about the vertical swivel axis (V) with respect to the transfer conveyor (11).

12. The material transfer apparatus (12) according to any one of the preceding claims,
**characterized in that**
the transfer apparatus (16) has a shaping support rack (22) and a lining (23) for guiding milled material, the support rack (22) supporting the lining (23).

13. The material transfer apparatus (12) according to claim 12,
**characterized in that**
an edge (28) of the transfer apparatus (16), which transitions from the horizontal to the vertical direction of the milled material transport, is formed by the support rack (22).

14. The material transfer apparatus (12) according to any one of the preceding claims 6-13,
**characterized in that**
the conveyor suspension 814), in particular joint axes of the conveyor suspension (14), are positioned in vertical direction above a support frame (15") and/or an upper run of the loading conveyor (5), in particular essentially within the width of the support frame (15") of the loading conveyor (5).

15. A ground milling machine (1), in particular a road milling machine, having a material transfer apparatus (12) according to any one of the preceding claims.

## Revendications

1. Dispositif (12) de transfert de matériau pour le transfert de matériau fraisé pour un engin (1) de fraisage du sol, comprenant :
- un convoyeur (5) de chargement pour décharger le matériau fraisé,
- un convoyeur (11) de transfert pour transporter le matériau fraisé sur le convoyeur (5) de chargement, et
- un dispositif de transfert (16) pour transférer le matériau fraisé du convoyeur de transfert (11) dans une ouverture (19) de réception d'un dispositif de réception (18) du convoyeur (5) de chargement,
dans lequel le convoyeur (5) de chargement est monté de telle sorte qu'il puisse pivoter autour d'un axe de pivotement vertical (V) et autour d'un axe de pivotement horizontal (H),
***caractérisé en ce que***
l'axe de pivotement horizontal (H) est disposé dans un plan vertical dans lequel se trouve l'axe de pivotement horizontal (H), dans la direction verticale au-dessus du convoyeur (5) de chargement, et dans une zone (29') dans le sens vertical, qui est définie entre ou au-dessus d'un point maximum inférieur verticalement et supérieur verticalement de l'ouverture (19) de réception.

2. Dispositif (12) de transfert de matériau selon la revendication 1,
***caractérisé en ce que***
l'axe de pivotement horizontal (H) est disposé dans un sens vertical au-dessous du convoyeur (11) de transfert.

3. Dispositif (12) de transfert de matériau selon l'une quelconque des revendications précédentes,
***caractérisé en ce que***
l'axe de pivotement horizontal (H) est disposé dans un sens vertical au niveau d'une zone d'entrée (26) de l'ouverture (19) de réception du dispositif de réception (18) et/ou l'axe de pivotement vertical (V) et l'axe de pivotement horizontal (H) s'intersectent en un point d'intersection (S).

4. Dispositif (12) de transfert de matériau selon l'une quelconque des revendications précédentes,
***caractérisé en ce que***
le dispositif de réception (18) est disposé sur le convoyeur (5) de chargement et prend la forme d'un boîtier qui se projette verticalement vers le haut depuis celui-ci et est fermé au moins sur les côtés et dans la direction de transport du matériau fraisé à l'arrière.

5. Dispositif (12) de transfert de matériau selon l'une quelconque des revendications précédentes,
***caractérisé en ce que***
l'ouverture de réception (19) est disposée à l'extrémité verticalement supérieure du dispositif de réception (18) et est en particulier polygonale, de manière préférée ovale, et encore davantage préférée essentiellement circulaire.

6. Dispositif (12) de transfert de matériau selon l'une quelconque des revendications précédentes,
***caractérisé en ce que***
un levier pivotant (15) est disposé sur le convoyeur (5) de chargement, ledit levier se projetant verticalement vers le haut et étant monté sur une suspension (14) du convoyeur sur sa face opposée au convoyeur (5) de chargement de manière à pivoter autour de l'axe de pivot horizontal (H).

7. Dispositif (12) de transfert de matériau selon l'une quelconque des revendications précédentes,
***caractérisé en ce que***
le dispositif de transfert (16) entoure complètement le trajet de transport du matériau fraisé, du transporteur de transfert (11) jusqu'au dispositif de réception (18) à l'exception d'une entrée (24) de transfert et d'une sortie (21) de transfert, et adopte en particulier la forme d'un tube coudé.

8. Dispositif (12) de transfert de matériau selon l'une quelconque des revendications précédentes,
***caractérisé en ce que***
le dispositif de transfert (16) possède une longueur excédentaire (27) dans une direction verticale dans le fond, qui est configurée de telle sorte qu'elle se projette dans le dispositif de réception (18) et s'étend verticalement sous l'ouverture de réception (19) du dispositif de réception (18).

9. Dispositif (12) de transfert de matériau selon la revendication 8,
***caractérisé en ce que***
la longueur excédentaire (27), en particulier à son extrémité verticalement inférieure, est complémentaire de l'ouverture de réception (19) du dispositif de réception (18), en particulier polygonale, de manière préférée ovale, et encore davantage préférée essentiellement circulaire.

10. Dispositif (12) de transfert de matériau selon l'une quelconque des revendications 8 ou 9,
***caractérisé en ce que***
la longueur excédentaire (27) est configurée de telle sorte qu'elle se projette encore dans le dispositif de réception (18) même lorsque le convoyeur de chargement (5) est pivoté latéralement autour de l'axe de pivot vertical (V) par rapport au convoyeur (11) de transfert, en particulier de jusqu'à 55°, de manière préférée de jusqu'à 65°, de manière davantage préférée de jusqu'à 75° et encore davantage préférée de jusqu'à 85°, en particulier indépendamment d'un pivotement du convoyeur de chargement (5) autour de l'axe de pivotement horizontal (H).

11. Dispositif (12) de transfert de matériau selon l'une quelconque des revendications précédentes,
***caractérisé en ce que***
le convoyeur de chargement (5) possède un dispositif de montage (17) pour le convoyeur qui comprend en particulier au moins une cheville (20), au moyen de laquelle le convoyeur de chargement (5) peut être monté sur un châssis (3) d'un engin (1) de fraisage du sol de telle sorte qu'il puisse pivoter autour de l'axe de pivotement vertical (V) par rapport au convoyeur (11) de transfert.

12. Dispositif (12) de transfert de matériau selon l'une quelconque des revendications précédentes,
***caractérisé en ce que***
le dispositif de transfert (16) possède un bâti de support façonné (22) et une paroi (23) pour guider le matériau fraisé, le bâti de support (22) supportant la paroi (23).

13. Dispositif (12) de transfert de matériau selon la revendication 12,
***caractérisé en ce que***
un rebord (28) du dispositif de transfert (16), qui fait transition de la direction horizontale à la direction verticale du transport du matériau fraisé, est formé par le bâti de support (22).

14. Dispositif (12) de transfert de matériau selon l'une quelconque des revendications 6 à 13,
***caractérisé en ce que***
la suspension (14) du convoyeur, en particulier les axes d'articulation de la suspension (14) du convoyeur, est/sont positionné(s) dans une direction verticale au-dessus d'un châssis support (15¨) et/ou un trajet supérieur du convoyeur de chargement (5), en particulier essentiellement dans la largeur du châssis support (15¨) du convoyeur de chargement (5).

15. Engin (1) de fraisage du sol, en particulier une fraiseuse routière, ayant un dispositif (12) de transfert de matériau selon l'une quelconque des revendications précédentes.
